# EUROPÄISCHE PATENTSCHRIFT

(11) **EP 3 590 813 B1**
(45) Veröffentlichungstag und Bekanntmachung des Hinweises auf die Patenterteilung: **15.12.2021**
(21) Anmeldenummer: 18181933.5
(22) Anmeldetag: 05.07.2018
(51) Int. Cl.: B62M 6/90, B62J 43/13, B62J 43/28, B62K 19/40, B62K 19/06, B62M 6/55, B62L 1/00, B62J 6/055, B62J 6/04, B62K 19/34, B62K 25/02, B62K 3/04, B62J 45/413, B62J 45/423, B62J 11/10, B62J 6/20

(54) **FAHRRAD MIT BATTERIEBETRIEBENEM HILFSANTRIEB UND FAHRRADRAHMEN HIERFÜR**
BICYCLE WITH BATTERY-ACTIVATED AUXILIARY DRIVE AND CORRESPONDING BICYCLE FRAME
BICYCLETTE POURVUE D'UN ENTRAÎNEMENT AUXILIAIRE FONCTIONNANT SUR BATTERIE ET CADRE DE BICYCLETTE CORRESPONDANT

(43) Veröffentlichungstag der Anmeldung: 08.01.2020
(73) Patentinhaber: Winora-Staiger GmbH, 97526 Sennfeld (DE)
(72) Erfinder: Beutner, Ingo, 97737 Gemünden (DE)
(74) Vertreter: V.O.

(56) Entgegenhaltungen:
- DE-A1-102016 010 338
- DE-B3-102016 205 539
- JP-A- H1 159 532
- JP-A- 2000 272 567

## Beschreibung

Vorliegende Erfindung betrifft einen Fahrradrahmen für ein Fahrrad mit batteriebetriebenem Hilfsantrieb, umfassend wenigstens ein Rahmenrohr, insbesondere ein Unterrohr, das zwischen einem Lenkkopfbereich und einem Antriebslager-bereich verläuft, und das in seinem Innenraum einen axial verlaufenden Batterieaufnahmeabschnitt aufweist, zur Aufnahme einer Batterie, insbesondere für den Hilfsantrieb.

Darüber hinaus betrifft die Erfindung ein Fahrrad mit einem solchen Fahrradrahmen.

Derartige Fahrradrahmen sind aus dem Stand der Technik bekannt. Sie werden u.a. für Fahrräder mit Hilfsantrieb, sogenannte E-bikes, verwendet. Der Hilfsantrieb ist meist ein batteriebetriebener Hilfsantrieb und insbesondere ein Elektromotor. Sehr häufig werden diese Hilfsantriebe mit einem Kurbelantrieb kombiniert, sodass der Betrieb des Fahrrades sowohl per Motor als auch per Tretbetrieb möglich ist.

Zur Aufnahme der Batterien zum Speisen der Hilfsantriebe solcher Fahrräder sind unterschiedliche Ausgestaltungen bekannt. So ist es üblich, Batterien außenseitig am Unterrohr des Fahrradrahmens zu befestigen, es ist aber auch bekannt, Batterieaufnahmeabschnitte in den Rohren des Fahrradrahmens vorzusehen, in die die Batterien eingesetzt werden können. Dazu werden beispielsweise Einsetzöffnungen auf den Mantelflächen der Rohre vorgesehen, in die die Batterien dann meist orthogonal zur Haupterstreckungsachse der jeweiligen Rohre eingesetzt werden können.

Erfordern Lösungen, bei denen die Batterie außenseitig an den Rahmenrohren befestigt werden müssen, meist aufwendige Befestigungssysteme und beschädigungsanfällige Abdeckungen, weisen die bisher aus dem Stand der Technik bekannten Verfahren und Vorrichtungen zum Einführen von Batterien in Rohre des Fahrradrahmens insbesondere statische Nachteile auf. So erfordern die aus dem Stand der Technik bekannten Fahrradrahmen mit im Innenraum eingesetzten Batterien, sogenannte Intube-Batterien, meist eine sehr dicke Wandkonstruktion der Rohre und aufwändige statische Aussteifungen, um die nötige Stabilität des Fahrradrahmens zu gewährleisten. Dies führt zu sehr teuren und darüber hinaus sehr schweren Fahrradrahmen. Dies ist nicht gewünscht.

Die gattungsgemäße DE 10 2016 205539 B3 beschreibt einen Fahrzeugrahmen mit einem Unterrohrabschnitt, einem Steuerrohrabschnitt und einem Tretlagerabschnitt, wobei sich der Unterrohrabschnitt zwischen dem Steuerrohrabschnitt und dem Tretlagerabschnitt erstreckt. Der Unterrohrabschnitt ist als ein Hohlprofil ausgebildet, in das ein Energiespeicher einsetzbar ist. Ferner weist der Unterrohrabschnitt an zumindest einem axialen Ende eine Öffnung auf, die eine Öffnung in dem Fahrzeugrahmen definiert, durch die ein Energiespeicher hindurch in den Unterrohrabschnitt einsetzbar und/oder aus dem Unterrohrabschnitt herausnehmbar ist.

Die JP 2000 272567 A offenbart eine Batteriemontage- und ―demontagevorrichtung, für ein E-bike. Die Batterie wird in einem hohlen Oberrohr von einem hinteren Öffnungsteil des Oberrohrs aus herausnehmbar gelagert, wobei der hintere Öffnungsteil durch ein drehbares Deckelteil geöffnet und geschlossen werden kann. Ein Sattel wird in einer vom hinteren Öffnungsteil des Oberrohrs versetzten Position im Deckelteil höhenverstellbar angebracht.

Die DE 10 2016 010338 A1 beschreibt eine Energiespeichervorrichtung für ein E-bike.

Die Vorrichtung umfasst eine Batterie und ein Mittel zum elektrischen Koppeln der Batterie mit dem E-bike. Die Batterie ist in ein Unterrohr des E-bikes integrierbar und durch ein Befestigungsmittel verriegelbar.

Die JP H11 59532 A beschreibt einen in einem Oberrohr eines E-bikes angeordneten Batteriespeicherplatz. Am hinteren Ende des Oberrohrs ist ein Deckelement zum Öffnen und Schließen des Batteriespeicherplatzes vorgesehen. Das Deckelement kann mittels eines aus einem Sattelrohr entfernbaren Sitzrohr geöffnet und geschlossen werden.

All diese Lösungen weisen jedoch Mängel auf.

Aufgabe der vorliegenden Erfindung ist es, ein Fahrrad anzubieten, das bei leichter Bauweise eine sichere Befestigung einer Batterie, insbesondere für einen Hilfsantrieb, erlaubt.

Diese Aufgabe wird durch einen Fahrradrahmen gemäß dem unabhängigen Anspruch 1 und ein Fahrrad gemäß dem Anspruch 13 gelöst.

Erfindungsgemäß wird diese Aufgabe gelöst durch einen Fahrradrahmen für ein Fahrrad mit batteriebetriebenem Hilfsantrieb, umfassend wenigstens ein Rahmenrohr, insbesondere ein Unterrohr, das zwischen einem Lenkkopfbereich und einem Antriebslagerbereich verläuft, und das in seinem Innenraum einen axial verlaufenden Batterieaufnahmeabschnitt aufweist, zur Aufnahme einer Batterie, insbesondere für den Hilfsantrieb, wobei der Batterieaufnahmeabschnitt eine stirnseitig verlaufende Einschuböffnung aufweist über die die Batterie mit ihrer Stirnseite voraus in den Batterieaufnahmeabschnitt einschiebbar ist, wobei im Innenraum des Rahmenrohres wenigstens ein Teil eines Batterieführungsmittels angeordnet ist, das eine Schiebeführung zum axialen Einschieben der Batterie in den Batterieaufnahmeabschnitt bildet, wobei das Batterieführungsmittel wenigstens eine optional integral am Rahmenrohr ausgebildete Führungsfeder und die Batterie wenigstens eine dazu wenigstens abschnittsweise komplementäre Führungsnut aufweisen, oder umgekehrt wobei die am Rahmenrohr ausgebildete Führungsfeder bzw. die am Rahmenrohr ausgebildete Führungsnut über die Einschuböffnung aus dem Batterieaufnahmeabschnitt und insbesondere dem Innenraum axial nach Außen ragt.

Darüber hinaus wird diese Aufgabe gelöst durch ein Fahrrad mit einem Hilfsantrieb und einem Fahrradrahmen, wie er hierin beschrieben ist.

Wesentlich ist, dass das Rahmenrohr derart ausgebildet ist, dass die in den Batterieaufnahmeabschnitt im Rahmenrohr einzuschiebende Batterie axial in das Rahmenrohr bzw. den Batterieaufnahmeabschnitt eingeführt werden kann und nicht, wie dieser aus dem Stand der Technik bekannt ist, über Einsetzöffnungen, insbesondere in der Mantelfläche des Rahmenrohres, die ein orthogonales Einsetzen der Batterie zur Haupterstreckungsachse erfordert. Aus statischer Sicht ergibt sich somit eine Rahmenkonstruktion, die bei wenigstens gleicher Stabilität eine sehr viel geringere Wandstärke und sehr viel geringere statische Aussteifungen erfordert.

Diese Erfindung betrifft sämtliche Arten von Rahmenrohren und insbesondere Unterrohre, die zwischen einem Lenkkopfbereich und einen Antriebslagerbereich verlaufen. Unter Lenkkopfbereich wird der Bereich eines Fahrradrahmens verstanden, in dem üblicherweise eine Vorderradgabel, ein Lenker, ein Vorbau etc. montiert wird. Er befindet sich üblicherweise im vorderen oberen Bereich eines Fahrrades. Unter Antriebslagerbereich wird der Bereich verstanden, in dem ein Antrieb gelagert wird, hier kann es sich um einen Tretantrieb, einen Hilfsantrieb oder eine Kombination aus beiden handeln. Bei einem herkömmlichen Fahrrad bzw. Fahrradrahmen ist ein solcher Antriebslagerbereich üblicherweise in der Mitte des Fahrrades unten zu finden. Der Antriebslagerbereich dient optional der Aufnahme eines Tretlagers bzw. einer Kurbel zum Kurbelantrieb des Fahrrades. Auch dient er bei einer besonderen Ausführungsform der Aufnahme eines Hilfsmotors und insbesondere einer Aufnahme eines Hilfsmotors kombiniert mit einem Tretantrieb. Das Rahmenrohr des erfindungsgemäßen Fahrradrahmens ist vorzugsweise direkt zwischen Lenkkopfbereich und Antriebslagerbereich angeordnet, verbindet diese Bereiche also ohne Zwischenrohre. Es ist aber auch denkbar, ein Unterrohr auszubilden, das über Zwischenrohre zwischen dem Lenkkopfbereich und dem Antriebslagerbereich verläuft.

Unter einem Hilfsmotor wird üblicherweise ein elektrischer Motor verstanden. Es kann sich aber auch um jede Art von anderem Motor und insbesondere auch um einen Verbrennungsmotor, insbesondere eine Brennstoffzelle handeln.

Optional ist es denkbar, dass die Einschuböffnung antriebslagerseitig angeordnet ist, sodass die Batterie vonseiten des Antriebslagers in den Batterieaufnahmeabschnitt des Rahmenrohres eingeschoben werden kann. Bei einem Fahrrad, bei dem der Antriebslagebereich mittig unten und der Lenkkopfbereich vorne oben ausgebildet ist, wird insofern also die Batterie von unten nach schräg oben eingeschoben. Optional ist der Fahrradrahmen derart ausgebildet, dass die Batterie entlang einer Einschubrichtung Rx axial zur Haupterstreckungsachse Ax des Batterieaufnahmeabschnitts in den Batterieaufnahmeabschnitt einschiebbar ist. Wird im Umfang der Erfindung von axial gesprochen, ist optional, außer es ist anderweitig erwähnt, immer die Haupterstreckungsachse des Batterieaufnahmeabschnitts oder eine dazu koaxiale Achse gemeint.

Optional ist das Rahmenrohr entlang der Haupterstreckungsebene des Fahrradrahmens (verlaufend von hinten nach vorne und in Radebene) und von vorne nach hinten betrachtet schräg nach unten geneigt ausgebildet. Der Batterieaufnahmeabschnitt ist optional gerade ausgebildet, d. h., er weist eine gerade Haupterstreckungsachse Ax auf. Diese Haupterstreckungsachse Ax ist vorzugsweise koaxial zur Haupterstreckungsachse des Rohres ausbildet, in dem der Batterieaufnahmeabschnitt ausgebildet ist. Es ist auch möglich, das Rahmenrohr gebogen auszuführen und darin entlang der Haupterstreckungsachse Ax des Batterieaufnahmeabschnitts einen wenigstens abschnittsweise geraden Batterieaufnahmeabschnitt vorzusehen. Auch ist es denkbar, den Batterieaufnahmeabschnitt und/oder die insbesondere dazu komplementär ausgebildete Batterie als nicht geraden Körper auszubilden, beispielsweise als gebogenen Körper, wobei die Haupterstreckungsachse beispielsweise dann die Form eines Kreis-, elliptischen oder dergleichen Bogens aufweist. Optional entspricht die Geometrie des Batterieaufnahmeabschnitts der Geometrie der Batterie. Dies betrifft insbesondere den Volumenkörper der Batterie, der dem Volumenkörper des Batterieaufnahmeabschnitts entspricht. Auch entspricht vorzugsweise der größte Querschnitt der Batterie, betrachtet entlang seiner Haupterstreckungsachse, dem größten Lichtraumprofil des Batterieaufnahmeabschnitts, betrachtet entlang dessen Haupterstreckungsachse, so dass die Batterie in den Batterieaufnahmeabschnitt eingeschoben werden kann.

Die Batterie ist vorzugsweise als lang gestreckter, zylindrischer oder dergleichen volumiger Körper ausgebildet. Die Batterie ist optional als allgemeiner Zylinder ausgebildet, mit einer Stirnseitenfläche, die entlang der Haupterstreckungsachse der Batterie verschoben den Volumenkörper der Batterie bildet. Optional ist das Rahmenrohr im Bereich des Batterieaufnahmeabschnitts gerade und die in den Batterieaufnahmeabschnitt einzuschiebende Batterie korrespondierend gerade ausgebildet, und zwar derart, dass sie in den Batterieaufnahmeabschnitt eingeschoben werden kann. An den Enden des Batterieaufnahmeabschnitts kann das Rahmenrohr entsprechende Anschlussrohre bzw. Anschlussbereich zum Anschluss an den Lenkkopfbereich und/oder den Antriebslagerbereich aufweisen.

Optional ist die Einschuböffnung wenigstens teilweise, insbesondere antriebslagerseitig, stirnseitig am Rahmenrohr angeordnet. Die Verallgemeinerung "wenigstens teilweise" bedeutet hier optional, dass die Einschuböffnung sich auch abschnittsweise in die Mantelfläche erstrecken kann, wobei optional diese Erstreckung maximal 30 %, optional maximal 20 % und weiter optional maximal 10 % der Gesamtgröße der Einschuböffnung umfasst. Optional ist ein Großteil der Einschuböffnung stirnseitig und nur ein geringerer Teil, insbesondere im Umfang der zuvor genannten Bereichsangaben mantelseitig am Rahmenrohr ausgebildet. Insbesondere die mantelseitige Ausführung der Einschuböffnung kann ein schwenkverschiebbares Einsetzen der Batterie in den Batterieaufnahmeabschnitt ermöglichen. So ist es denkbar, die Batterie unter einem geringen Schwenkwinkel α in die Einschuböffnung einzuführen und dann während des axialen Verschiebens um diesen Schwenkwinkel α verschwenkend achsenparallel auszurichten. Optional beträgt dieser Schwenkwinkel α weniger 25°, weiter optional weniger 15° und weiter optional weniger 5°.

Optional ist die Mantelfläche des Rahmenrohres im Bereich des Batterieaufnahmeabschnitts zu wenigstens 90 %, insbesondere wenigstens 95 %, geschlossen. Dies bedeutet insbesondere, dass optional keine Öffnungen vorgesehen sind, die von der Mantelfläche aus im Bereich des Batterieaufnahmeabschnitts das Einsetzen und insbesondere Einschwenken der Batterie erlauben.

Optional bedeutet die stirnseitige Ausbildung der Einschuböffnung, dass die Einschuböffnung in einem Bereich des Rahmenrohres vorgesehen ist, der nicht oder nur geringfügig in der Mantelfläche im Bereich des Batterieaufnahmeabschnitts liegt. Wahlweise erstreckt sich die Einschuböffnung in einer Ebene, die orthogonal zur Hauterstreckungsachse des Batterieaufnahmeabschnitts liegt und wahlweise in einer Ebene, die um maximal ± 25°, weiter optional um maximal ± 15° und weiter optional um maximal ± 5° von dieser Ebene um eine Achse orthogonal zur Haupterstreckungsachse abweicht. Bzw. geneigt ist.

Optional ist seitlich am Rahmenrohr und im Speziellen außerhalb einer axialen Verlängerung des Lichtraumprofils des Batterieaufnahmeabschnitts am Rahmenrohr der Antriebslagerbereich ausgebildet, insbesondere umfassend ein Antriebslagergehäuse, zur Aufnahme des Hilfsantriebs, und zwar derart, dass die Batterie seitlich an einem im Antriebslagergehäuse gelagerten Hilfsantrieb vorbei in den Batterieaufnahmeabschnitt einschiebbar ist.

Hier sei erwähnt, dass der Hilfsantrieb auch als eine Kombination aus Motorantrieb und Tretantrieb ausgebildet sein kann. Die Ausgestaltung des derart angeordneten Antriebslagerbereichs erlaubt das Einführen der Batterie ohne oder mit nur geringem Schwenkwinkel α in den Batterieaufnahmeabschnitt im Rahmenrohr. Optional ist insbesondere antriebslagerseitig umfangseitig ein Antriebslagergehäuse für den Hilfsmotor derart am Rahmenrohr angeschlossen, dass die Batterie seitlich an einem dem Antriebslagergehäuse gelagerten Hilfsantrieb vorbei in den Innenraum einschiebbar ist. Das Antriebslagergehäuse ist wahlweise zur Aufnahme eines Hilfsantriebs mit Tretkurbelantrieb ausgebildet.

Der erfindungsgemäße Fahrradrahmen und insbesondere das Rahmenrohr können wenigstens abschnittsweise aus einem Extrusionsprofil oder dergleichen insbesondere Strangpressprofil hergestellt sein. Es ist möglich, den Fahrradrahmen aus einem Metallwerkstoff, und insbesondere Aluminium, herzustellen. Darüber hinaus ist es denkbar, den Fahrradrahmen aus einem Kunststoffmaterial, und insbesondere aus einem Carbonmaterial oder dergleichen Faserwerkstoff, herzustellen. Hybridformen sind ebenfalls denkbar.

Wahlweise ist ein Abdeckelement vorgesehen, das, die Einschuböffnung überdeckend, lösbar am Rahmenrohr angeordnet ist. Auch ist es denkbar, ein Abdeckelement vorzusehen, das, die Einschuböffnung überdeckend, lösbar am Rahmenrohr und am Antriebslagergehäuse anordbar ist. Es ist denkbar, dass das Abdeckelement als Rammschutzelement fungiert. Auch ist es denkbar, dass das Abdeckelement als Aufnahmeelement für Werkzeug oder dergleichen Zubehör für das Fahrrad bzw. den Fahrradrahmen ausgebildet ist. Zudem ist es denkbar, in einem Raum im Bereich der Einschuböffnung und/oder an dem Abdeckelement entsprechende Halterungen und/oder Aufnahmeräume für solches Werkzeug und Zubehör zur Verfügung zu stellen.

Wie erwähnt ist im Innenraum des Rahmenrohres und insbesondere in das Lichtraumprofil des Batterieaufnahmeabschnitts einragend wenigstens ein Teil eines Batterieführungsmittels angeordnet, das eine Schiebeführung zum axialen Einschieben der Batterie in den Batterieaufnahmeabschnitt bildet. Das Batterieführungsmittel weist wenigstens eine optional integral am Rahmenrohr ausgebildete Führungsfeder und die Batterie wenigstens eine dazu wenigstens abschnittsweise komplementäre Führungsnut auf, und/oder umgekehrt. Es ist vorgesehen, dass die Führungsfeder bzw. die Führungsnut, wenn sie am Rahmenrohr ausgebildet sind bzw. angeordnet sind, über die Einschuböffnung aus dem Batterieaufnahmeabschnitt und insbesondere dem Innenraum axial nach außen ragen. Insbesondere ragen sie so axial nach außen, dass ein Koppeln der Batterie mit dem Batterieführungsmittel am Rahmenrohr möglich ist und so ein geführtes Einschieben in den Batterieaufnahmeabschnitt schon vor Erreichen des Batterieaufnahmeabschnitts möglich ist. Es ist denkbar, eine oder mehrere Führungsfedern bzw. Führungsnuten oder dergleichen Führungselement am Rahmenrohr und/oder der Batterie vorzusehen. Darüber hinaus ist es denkbar, insbesondere im Innenraum des Rahmenrohres weitere Führungselemente, beispielsweise Führungsschienen, hervorstehende Führungsanschläge, Führungsvorsprünge, komplementäre Führungsnuten, Führungsvertiefungen etc. auszubilden.

Es ist denkbar, am Batterieführungsmittel entsprechende Schleifmittel und/oder Klemmmittel vorzusehen, um einen Klemmsitz zwischen Batterie und Rahmenrohr insbesondere im eingeschobenen Zustand zu gewährleisten. Auf diese Weise kann die Batterie wenigstens temporär im Rahmenrohr gelagert und ein Herausrutschen der Batterie verhindert werden, bis eine endgültige Verriegelung, wie sie insbesondere im Folgenden noch im Detail beschrieben ist, erfolgt ist.

Wahlweise sind die Führungsnut und/oder Führungsfeder koaxial zur Einschubrichtung verlaufend ausgebildet. Die Einschubrichtung ist optional co-axial zur Haupterstreckungsachse des Batterieaufnahmeabschnittes ausgerichtet.

Es ist denkbar, das Batterieführungsmittel mit einem Leitelement auszubilden, das optional vom Antriebslagerbereich zum Innenraum des Rahmenrohres und dort optional zum Batterieaufnahmeabschnitt verläuft und eine Einleitführung für die Batterie und insbesondere ein Einleitführung zum Koppel der Batterie mit einem Batterieführungsmittel bildet. Die Einleitführung kann so ausgebildet sein, dass sie eine Führung für die Batterie zum Koppeln mit dem Batterieführungsmittel bildet. So kann das Leitelement eine Führung bilden, um eine Führungsnut an der Batterie mit einer Führungsfeder am Rahmen, und/oder umgekehrt einfach in Kopplung zu bringen. Hier sind sämtliche Führungselemente anwendbar. Das Leitelement ist optional zur Haupterstreckungsachse des Batterieaufnahmeabschnitts so geneigt, dass eine darin angesetzte Batterie einen Schwenkwinkel von maximal 25°, optional von maximal 15°, weiter optional von maximal 5° zur Haupterstreckungsachse aufweist. Sobald die Batterie über das Leitelement in das Batterieführungsmittel und mittels diesem in den Batterieaufnahmeabschnitt im Innenraum des Rahmenrohres geschoben wird, verändert sich sukzessive dieser Schwenkwinkel, sodass sich die Batteriehaupterstreckungsachse im Laufe des Einschiebens in den Batterieaufnahmeabschnitt sukzessive der Haupterstreckungsachse des Batterieaufnahmeabschnitts annähert und bei vollständigem eingeschobenen Zustand koaxial dazu ausgerichtet ist.

Optional gilt im Umfang der Erfindung, dass unter axialem Einschieben auch ein Einschieben mit einer Winkelabweichung der Batteriehaupterstreckungsachse relativ zur Batterieaufnahmeabschnitthaupterstreckungsachse um maximal 25°, optional von maximal 15°, optional um maximal 5° mit umfasst ist.

Es ist denkbar, im Innenraum des Rahmenrohres Kabelführungsmittel zur Führung von Kabelzügen anzuordnen. Kabelzüge können sein: Schaltzüge, Seilzüge, Bremszüge, Kabel und Leitungen und dergleichen Züge und Kabel, insbesondere zur Ansteuerung, Kontrolle und Überwachung des Fahrrades bzw. Fahrradrahmens. Solche Kabelführungsmittel können insbesondere integral mit dem Rahmenrohr ausgebildet sein. Hier sind beispielsweise jegliche Arten von Klemmen, Kanälen und Rohren denkbar. Auch ist es denkbar, die Kabelführungsmittel integral mit dem Batterieführungsmittel und insbesondere wenigstens einer Führungsfeder und/oder Führungsnut auszubilden. Es ist denkbar, die Kabelführungsmittel so auszubilden, dass sie ein Einsetzen von Kabelzügen in nur axialer Richtung, also insbesondere entlang der Haupterstreckungsachse der Kabelführung erlauben, es ist aber auch denkbar, die Kabelführungsmittel als insbesondere orthogonal zur Haupterstreckungsachse offene Aufnahmemittel auszuführen, sodass Kabelzüge orthogonal zur Haupterstreckungsachse in die Kabelführungsmittel eingeführt werden können. Insbesondere sind die Kabelführungsmittel optional ausgebildet zum Festklemmen oder dergleichen Festlegen der Kabelzüge im Innenraum, insbesondere um ein Klappern der Kabel bei der Benutzung des Fahrrades zu verhindern.

Wahlweise ist insbesondere im Innenraum des Rahmenrohres wenigstens ein Batteriearretierungsmittel vorgesehen, zum Arretieren der Batterie und optional unterschiedlicher Batterien im Batterieaufnahmeabschnitt, insbesondere umfassend eine Stirnseitenkappe, die über die Einschuböffnung in den Innenraum des Rahmenrohres einsetzbar und dort lösbar verriegelbar ist und so eine in den Batterieaufnahmeabschnitt eingeschobene Batterie insbesondere gegen ein axiales Herausschieben verriegelt.

Insbesondere zum Verriegeln unterschiedlicher Batterien, ist die Stirnseitenkappe derart ausgebildet, dass sie an unterschiedlichen Positionen im Rahmenrohr verriegelbar ist. Optional ist der Fahrradrahmen, optional das Batterieverriegelungsmittel, und weiter optional die Stirnseitenkappe derart ausgebildet, dass unterschiedliche Batterien und insbesondere unterschiedlich lange Batterien vollständig in den Batterieaufnahmeabschnitt, optional bis an ein lenkkopfbereichsseitiges Ende schiebbar sind, um dann antriebslagerbereichsseitig verriegelt zu werden. Optional kann die Batterie bis zu einem Batterieanschlussmittel und insbesondere einem Batteriehub eingeschoben werden, welche im Folgenden noch im Detail beschrieben sind.

Die Stirnseitenkappe kann optional stirnseitig insbesondere lösbar an der Batterie befestigbar ausgebildet sein. Hier sind beispielsweise Schiebefixierungen, Rastfixierungen, Schnappfixierungen etc. anwendbar. Vorzugsweise ist die Stirnseitenkappe derart ausgebildet, dass sie zusammen mit der Batterie in den Innenraum des Rahmenrohres einschiebbar ist. Auch ist es denkbar, entsprechende Adaptermittel vorzusehen, um die Stirnseitenkappe mit unterschiedlichen Batterien in Verbindung zu bringen bzw. eine sichere Fixierung der Batterie im Batterieaufnahmeabschnitt zu gewährleisten. Optional weist die Stirnseitenkappe wenigstens einen Teil des Batterieführungsmittels und insbesondere eine Führungsnut und/oder eine Führungsfeder auf. Die Verriegelung und/oder Entriegelung kann durch Vorspannung, und insbesondere Federvorspannung, durch manuelle und/oder mechanische und/oder elektrische Betätigung erreicht werden.

Optional weist die Stirnseitenkappe wenigstens ein Verriegelungsmittel und das Rahmenrohr wenigstens ein Verriegelungsgegenmittel auf, oder umgekehrt, die mittels eines Betätigungsmittels miteinander unter Verriegelung der Batterie im Batterieaufnahmeabschnitt miteinander in Verriegelungsstellung und unter Freigabe der Batterie im Batterieaufnahmeabschnitt in eine Entriegelungsstellung bringbar sind. Insbesondere zur Verriegelung unterschiedlicher und insbesondere unterschiedlich langer Batterien, sind optional eine Mehrzahl an Verriegelungsgegenmitteln und/oder Verriegelungsmitteln, insbesondere axial hintereinander insbesondere im Innenraum des Rahmenrohres vorgesehen. Das Betätigungsmittel kann beispielsweise ein Schlossmittel, ein Hebel, ein Elektromotor, ein Vorspannmittel, wie ein Feder, oder jede andere Art von Mittel sein, um das Verriegelungsmittel in die Verriegelungsstellung zu drängen oder aus dieser zu entfernen bzw. das Verriegelungsgegenmittel in die Verriegelungsstellung zu bringen oder aus dieser zu entfernen.

Wahlweise weist beispielsweise das Verriegelungsmittel wenigstens einen Sperrbolzen auf, und das Verriegelungsgegenmittel wenigstens eine komplementäre Sperrbolzenaufnahme, oder umgekehrt, wobei der Sperrbolzen in Verriegelungsstellung die Stirnseitenkappe verriegelnd in die Sperrbolzenaufnahme eingreift und in Entriegelungsstellung die Stirnseitenkappe entriegelnd außer Eingriff mit der Sperrbolzenaufnahme steht. In Verriegelungsstellung ist die Stirnseitenkappe so fest am Rahmenrohr fixiert und die im Batterieaufnahmeabschnitt gehaltene Batterie arretiert. In der Entriegelungsstellung kann die Stirnseitenkappe aus dem Innenraum entnommen und die Batterie aus dem Batterieaufnahmeabschnitt herausgeschoben werden. Ist die Stirnseitenkappe mit der Batterie verbunden, ist es denkbar, die Verbindung so auszugestalten, dass ein Entnehmen der Stirnseitenkappe gleichzeitig ein Herausziehen der Batterie erlaubt. Hier können entsprechende Entnahmehilfsmittel zum Herausziehen der Batterie aus dem Batterieaufnahmeabschnitt zur Verfügung gestellt werden. Hier sind beispielsweise Griffe, Hakenelemente, Bügel oder dergleichen Zugelemente anwendbar, die beispielsweise an der Stirnseitenkappe und/oder der Batterie ausgebildet sein können. Solche Entnahmehilfsmittel können auch oder alternativ an der Batterie vorgesehen sein.

Optional sind eine Mehrzahl an Sperrbolzenaufnahmen bzw. Sperrbolzen am Rahmenrohr vorgesehen, insbesondere um unterschiedliche Batterien und im Besonderen unterschiedlich lange Batterien zu verriegeln.

Optional ist der wenigstens eine Sperrbolzen orthogonal zur Haupterstreckungsachse der Batterie angeordnet, wenn die Stirnseitenkappe an der Batterie angeordnet und/oder die Stirnseitenkappe im Innenraum des Rahmenrohres verriegelt eingesetzt ist. Der Sperrbolzen kann beispielsweise federvorgespannt ausgebildet sein, sodass er in die Verriegelungsstellung drängt. Der Sperrbolzen kann beispielsweise Einsatzschrägen aufweisen, sodass er die Federvorspannung überwindend in die Sperrbolzenaufnahmen eingeschoben werden kann, wobei beim Einsetzen die Sperrbolzen kurzzeitig zurückgedrängt werden, um dann anschließend wieder in die Sperrbolzenaufnahmen einzugreifen. Die Sperrbolzen können optional mittel des Betätigungsmittels aus der Verriegelungsstellung in die Entriegelungsstellung zurückgezogen werden und zwar optional gegen eine Federvorspannung. Das Betätigungsmittel kann optional als Schlossmittel vorgesehen sein, um nur einer berechtigen Person, beispielsweise mittels eines passenden Schlüssel, das Entriegeln und/oder Verriegeln der Stirnseitenkappe und insofern das Entnehmen der Batterie zu erlauben. Hier sind sämtliche Arten von Schlössern, insbesondere mechanische, elektronische, magnetische als auch elektromechanische Schlösser verwendbar. Vorzugsweise sind zwei diametral zueinander ausgebildete Sperrbolzen an der Stirnseitenkappe ausgebildet, die in Verriegelungsstellung in korrespondierend ausgebildete Sperrbolzenaufnahmen am Rahmenrohr eingreifen.

Wahlweise ist insbesondere im Innenraum des Rahmenrohres wenigstens ein Batterie-Temporärhaltemittel und insbesondere ein Batterieklemmmittel derart vorgesehen, dass die Batterie im Batterieaufnahmeabschnitt gegen Einwirken der Schwerkraft in der Entriegelungsstellung klemmfixiert gelagert, aber manuell durch einen Benutzer über eine Zugkraft entgegengesetzt zur Einschubrichtung Rx herausziehbar ist. Auf diese Weise kann eine Batterie in den Batterieaufnahmeabschnitt eingeführt werden, wobei sie dort verbleibt und der Nutzer so auf sehr einfache Weise eine Verriegelung durchführen kann, ohne dass er sich darum kümmern muss, die Batterie im Batterieaufnahmeabschnitt zu halten. Ein solches Batterie-Temporärhaltemittel kann beispielsweise die zuvor beschriebene Ausführung der Führungsfeder mit entsprechenden vorgesehenen Klemmmittel sein. Ein Klemmmittel kann u.a. ein Federvorspannmittel, ein Reibmittel oder ein Haftmittel sein.

Es ist denkbar, entsprechende Klemmmittel am Rahmenrohr oder entsprechenden anderen Mitteln, wie dem Batterieführungsmittel und solchen Mitteln, wie sie im Folgenden auch noch im Detail beschrieben werden, vorzusehen, um insbesondere einen Klemm- oder Reibungssitz der Batterie im Batterieaufnahmeabschnitt zu erzielen.

Wahlweise ist insbesondere im Innenraum des Rahmenrohres wenigstens ein Batterieanschlussmittel vorgesehen, das insbesondere im Bereich des zum Lenkkopfbereich weisenden Endes des Rahmenrohres, und insbesondere angrenzend an den Batterieaufnahmeabschnitt, einen Batteriehub aufweist, zum Anschluss der in den Batterieaufnahmeabschnitt eingeschobenen Batterie. Dieser Batteriehub weist vorzugsweise einen Stecker bzw. eine Steckeraufnahme auf, die komplementär zu einer Steckeraufnahme bzw. einem Stecker an der Batterie ausgebildet ist. Weiter ist vorzugsweise eine magnetische Hafteinrichtung derart vorgesehen, dass Batteriehub und Batterie im eingeschobenen Zustand eine Haftkraft zueinander aufweisen, sodass die Batterie im Batterieaufnahmeabschnitt gegen Einwirken der Schwerkraft in der Entriegelungsstellung fixiert gelagert, aber manuell durch einen Benutzer über eine Zugkraft entgegengesetzt zur Einschubrichtung Rx herausziehbar ist. Hier gelten die zuvor in Bezug auf die Batterie-Temporärhaltemittel genannten Möglichkeiten identisch.

Wahlweise ist insbesondere im Innenraum des Rahmenrohres ein Schienensystem ausgebildet und/oder in diesen einführbar, das wenigstens eine Schiene aufweist, die insbesondere axial in eine wahlweise integral am Rahmenrohr ausgebildete komplementäre Schienenaufnahme einschiebbar ist, wobei das Schienensystem wahlweise am Rahmenrohr mittels eines Festlegemittels gegen eine Axialbewegung festlegbar ist, und wobei das Schienensystem zur Aufnahme eines Batteriearretierungsmittels und/oder eines Batterieführungsmittels und/oder eines Batterieanschlussmittels und/oder eines Batterie-Temporärhaltemittels ausgebildet ist oder ein solches aufweist. Diese zuvor beschriebenen Mittel sind vorzugsweise also mit einem Schienensystem kombinierbar und insbesondere vorzugsweise zusammen mit diesem in den Innenraum des Rahmenrohres einschiebbar. Wahlweise kann das Schienensystem vorkomplettiert mit wenigstens einem der zuvor genannten Mittel oder Teilen davon ausgestattet sein und so als Einheit in den Innenraum des Rahmenrohres eingeschoben werden. Im Detail ist also das Schienensystem optional derart ausgebildet, dass es zusammen mit wenigstens einem der zuvor beschriebenen Mittel, nämlich dem Batteriearretierungsmittel, Batterieführungsmittel, Batterieanschlussmittel und Batterie-Temporärhaltemittel, oder wenigstens Teilen davon in den Innenraum des Rahmenrohres einschiebbar ist. Auf diese Weise können vorkomplettierte Schienensystemversorgungssysteme zur Verfügung gestellt werden, die je nach Fahrradrahmen mit unterschiedlichen Mitteln bestückt eingeschoben werden können und so einen schnellen Aufbau eines Fahrrades erlauben.

So kann insbesondere in diesem Zusammenhang das Verriegelungsgegenmittel bzw. Verriegelungsmittel des Batteriearretierungsmittels an wenigstens einer Schiene des Schienensystems ausgebildet sein. So können beispielsweise an der wenigstens einen Schiene wenigstens ein Verriegelungsgegenmittel und/oder wenigstens ein Verriegelungsmittel vorgesehen sein. Optional ist es denkbar an der Schiene wenigstens einen Sperrbolzen und/oder wenigstens eine Sperrbolzenaufnahme vorzusehen. Insbesondere zur Verriegelung unterschiedlicher und insbesondere unterschiedlich langer Batterien, sind optional eine Mehrzahl an Sperrbolzen und/oder Sperrbolzenaufnahmen, insbesondere axial hintereinander insbesondere im Innenraum des Rahmenrohres vorgesehen. Auch ist es denkbar, dass ein Teil des Batterieanschlussmittels und insbesondere der Batteriehub am Schiebensystem ausgebildet ist und so einfach in das Rahmenrohr eingeschoben werden kann. Es sind optional auch Kabelführungen am Schienensystem vorsehbar, die optional zur Zuführung bzw. Ableitung von Kabeln an das Batterieanschlussmittel dienen, und wahlweise am Schienensystem befestigt sein können. Auch ist es denkbar, die Batterie-Temporärhaltemittel wenigstens teilweise am Schienensystem auszuführen und insbesondere wenigstens eine Schiene mit einem Klemmmittel auszurüsten bzw. diese als ein solches Klemmmittel auszubilden, insbesondere derart, dass sie die im Batterieaufnahmeabschnitt eingeschobene Batterie gegen ein Arretierungselement vorspannt und so wenigstens temporär, wie hier bereits beschrieben, gegen ein Herausfallen festlegt.

Zudem kann optional wenigstens eines der beschriebenen Mittel derart ausgebildet sein, dass es der Festlegung der Batterie im Aufnahmeabschnitt dient, insbesondere um einen festen, spielfreien Sitz der Batterie zu gewährleisten.

Grundsätzlich ist es möglich, optional alternativ oder in Ergänzung zum beschriebenen Schienensystem, das Rahmenrohr mit Lager- und/oder Führungselementen zum Lagern bzw. Führen der Batterie auszubilden. Diese Lager- und/oder Führungselemente sind optional integral am Rahmenrohr ausgebildet.

Wahlweise ist eine Verriegelung des Schienensystems im Rahmenrohr gegen axiales Herausgleiten des Schienensystems vorgesehen. So können beispielsweise Schienenaufnahmen vorgesehen sein, die ein axiales Einführen des Schienensystems bzw. wenigstens einer Schiene in das Rahmenrohr erlauben und eine Arretierung in wenigstens eine orthogonale Richtung zur Haupterstreckungsachse erlauben. Eine axiale Fixierung erfolgt dann beispielsweise über ein zusätzliches Fixiermittel, beispielsweise einen Schnappriegel, einen Schraubbolzen oder jede andere Art von Verriegelung, die beispielsweise ein Festlegen des Schienensystems und insbesondere der einen Schiene am Rahmenrohr oder eines vergleichbaren dazu geeigneten Bauteils erlauben. Eine solche Schienenaufnahme kann eine Einschiebenut sein, die komplementär zur Schiene ausgebildet ist.

Wie zuvor erwähnt betrifft die Erfindung auch ein Fahrrad mit einem batteriebetriebenen Hilfsantrieb und einem Fahrradrahmen, wie er hier beschrieben ist. Aus Redundanzgründen wird jedoch lediglich auf das hierin in Bezug auf den Fahrradrahmen Gesagte verwiesen. Für das Fahrrad gilt Identisches.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1: eine isometrische Ansicht einer Ausführungsform des erfindungsge-mäßen Fahrrades;
- Fig. 2: eine isometrische Darstellung einer Ausführungsform des erfindungsgemäßen Fahrradrahmens;
- Fig. 3 und 4: Ausführungsformen des erfindungsgemäßen Fahrradrahmens im Längsschnitt;
- Fig. 5: eine isometrische Darstellung einer Ausführungsform des Fahrradrahmens gemäß Fig. 3 mit geöffneter Einführöffnung;
- Fig. 6: eine isometrische Detail-Darstellung der Ausführungsform gemäß Fig. 3 mit teilgeschnittener Mantelfläche des Rahmenrohres;
- Fig. 7: eine isometrische Detail-Darstellung der Ausführungsform gemäß Fig. 3 mit entfernter Mantelfläche des Rahmenrohres und entfernter Batterie;
- Fig. 8: eine isometrische Darstellung der Ausführungsform gemäß Fig. 3 mit entfernter Batterie;
- Fig. 9: eine isometrische Darstellung in Querschnittsrichtung gemäß der Sichtrichtung aus Fig. 5 durch die Ausführungsform gemäß Fig.3;
- Fig. 10: isometrische Darstellungen einer Ausführungsform der Batterie
- Fig. 11 - 13: isometrische Darstellungen von Lichtelementen integriert in Ausfallenden des Fahrrades gemäß Fig. 1;
- Fig. 14: isometrische Detaildarstellungen der Lichtelemente gemäß Fig. 11;
- Fig. 15: eine isometrische Darstellung einer Ausführungsform eines Messrings gemäß Fig. 1;
- Fig. 16: ein Ansicht des Messrings gemäß Fig. 15; und
- Fig. 17: eine Seitenansicht des Messrings gemäß Fig. 15.

Im Folgenden werden für gleiche und gleich wirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier besprochene technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angibt, jedoch das Vorhandensein oder das Hinzufügen eines oder mehrerer anderer Merkmale nicht ausschließt. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert.

Die Erfindung wird hier anhand der beiliegenden Zeichnungen beschrieben, in denen Ausführungsformen der Erfindung gezeigt sind. Diese Ausführungsformen sind hier angegeben, damit die vorliegende Offenbarung gründlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben.

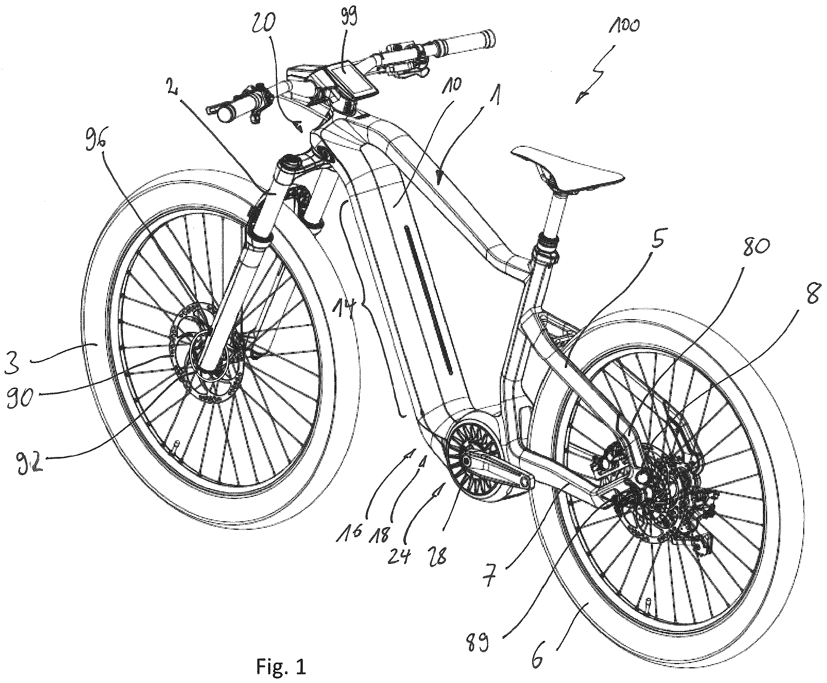

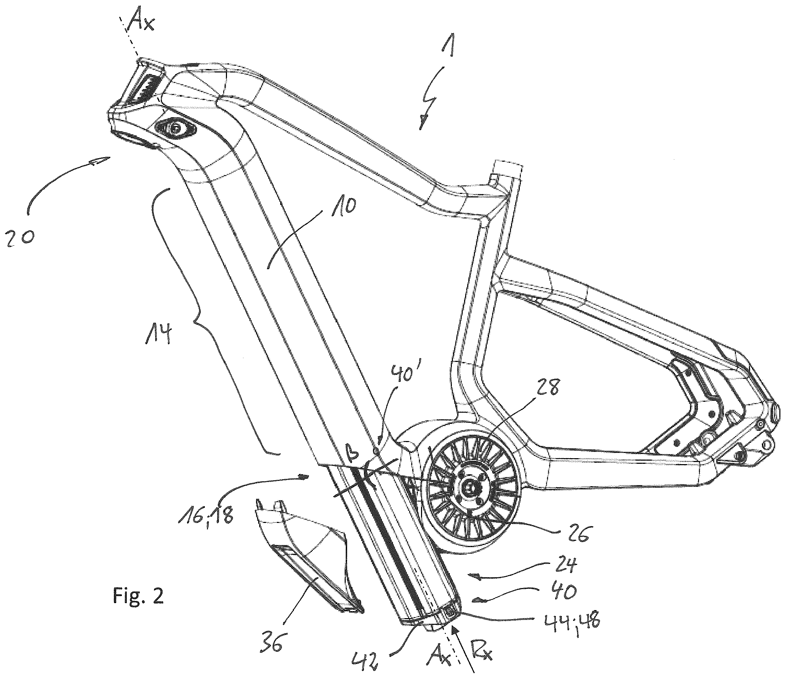

Fig. 1 zeigt eine isometrische Darstellung einer Ausführungsform des erfindungsgemäßen Fahrrades 100, umfassend eine Ausführungsform des erfindungsgemäßen Fahrradrahmens 1. Dieser Fahrradrahmen 1 ist in den weiteren Figuren dargestellte Fig. 2 ― 9 und im Detail erläutert. Am Fahrradrahmen 1 ist in einem Lenkkopfbereich 20 eine Vordergabel 2 angeordnet, die ein Vorderrad 3 trägt. An diesem Vorderrad 3 ist eine Bremsscheibe 90 umfassend einen Messring 92 angeordnet, die im weiteren Verlauf noch im Detail beschrieben wird, und Teil eines inkrementellen Messwegesystems ist. Weiter ist am Fahrradrahmen 1 ein Hinterrad 6 angeordnet, das an einem Ausfallende 8 positioniert ist. Das Ausfallende 8 ist Teil des Fahrradrahmens 1, wobei es in bekannter Art und Weise an Sitzstreben 5 und Kettenstreben 7 angeschlossen ist. Optional ist es möglich, obigen Messring 92 bzw. das inkrementelle Messwegesystem auch oder alternativ am Hinterrad bzw. Rahmenkomponenten in diesem Bereich zu positionieren. An den Ausfallenden 8 und insbesondere im Bereich angrenzend an die Sitzstreben 5 sind Lichtelemente 80 integriert, die im Detail im Folgenden noch weiter erläutert werden.

Der Fahrradrahmen 1 umfasst einen Antriebslagerbereich 24, an dem ein Antriebslagergehäuse 26 zur Aufnahme eines insbesondere batteriebetriebenen Hilfsmotors 28 ausgebildet ist. Der Hilfsmotor 28 kann beispielsweise ein Elektromotor und insbesondere ein Elektromotor mit Kurbelantrieb sein. Die entsprechende Kurbel ist hier nicht dargestellt.

Hinsichtlich der hier dargestellten Ausführungsformen gilt das im vorhergehenden allgemeinen Teil beschriebene identisch; es ist in Gänze auf die dargestellten Ausführungsformen anwendbar.

Der Fahrradrahmen 1 umfasst darüber hinaus ein Rahmenrohr 10, das zwischen dem Lenkkopfbereich 20 und dem Antriebslagerbereich 24 verläuft. In dieser Ausführungsform kann das Rahmenrohr 10 als Unterrohr bezeichnet werden. Es verläuft optional in geneigter Ausführung von einem in Bezug auf die Fahrradlängsebene vorne oben angeordnetem Lenkkopfbereich 20 und einem im Wesentlichen mittig unten angeordneten Motorlagerbereich.

Erfindungsgemäß ist das Rahmenrohr 10 derart ausgebildet, dass in seinem Innenraum 12 und einem dort axial verlaufenden Batterieaufnahmeabschnitt 14 eine Batterie 104, insbesondere für den Hilfsantrieb 28, eingeschoben werden kann.

Dabei ist erfindungsgemäß der Batterieaufnahmeabschnitt 14 mit einer stirnseitig 16 verlaufenden Einschuböffnung 18 ausgestattet, über die die Batterie 104 mit ihrer Stirnseite 102 voraus in den Batterieaufnahmeabschnitt 14 einschiebbar ist.

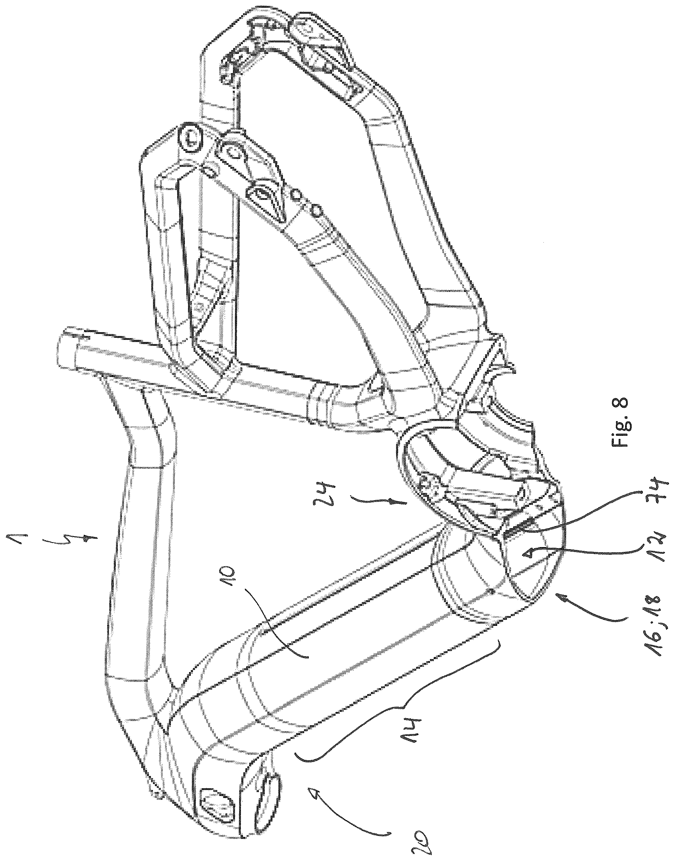

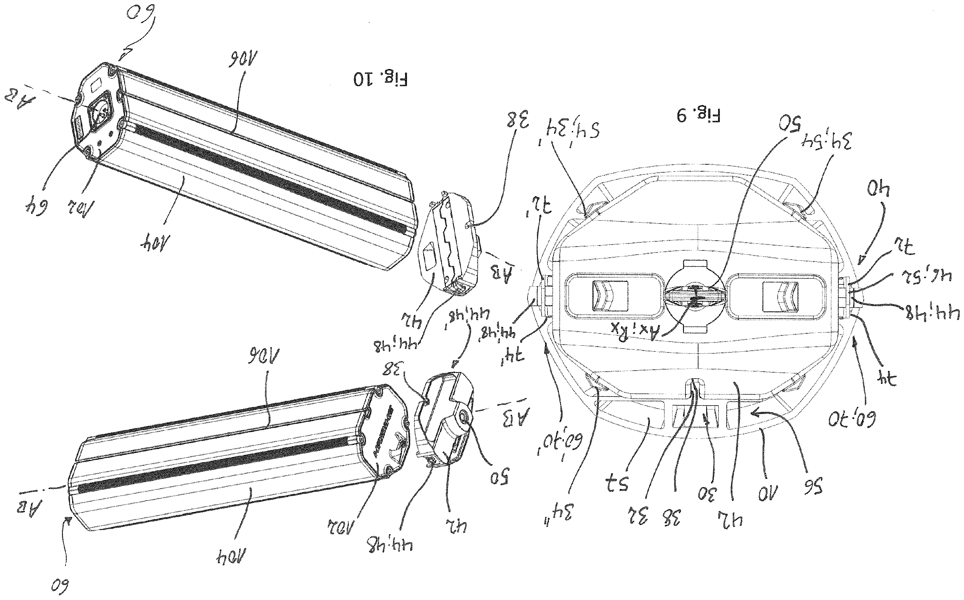

Die erfindungsgemäße Anordnung bzw. Einschubmöglichkeit der Batterie 104 in den Fahrradrahmen 1, und insbesondere den Batterieaufnahmeabschnitt 14, ist in den Figuren 1 bis 9 im Detail dargestellt. Fig. 10 widmet sich der Detaildarstellung der Batterie 104.

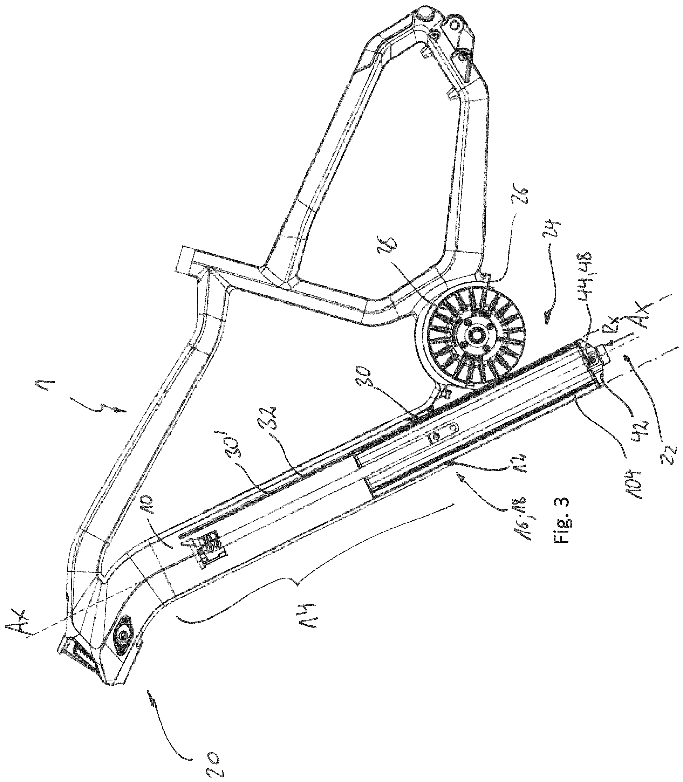

Wie insbesondere in Fig. 3 dargestellt, ist wahlweise der Fahrradrahmen derart ausgebildet, dass die Batterie 104 entlang einer Einschubrichtung Rx axial zur Haupterstreckungsachse Ax des Batterieaufnahmeabschnitts 14 in den Batterieaufnahmeabschnitt einschiebbar ist. Wenn, wie dies optional möglich ist, die Einschuböffnung 18 antriebslagerseitig 24 angeordnet ist, erfolgt das Einschieben der Batterie 104 von der Unterseite des Fahrrades her.

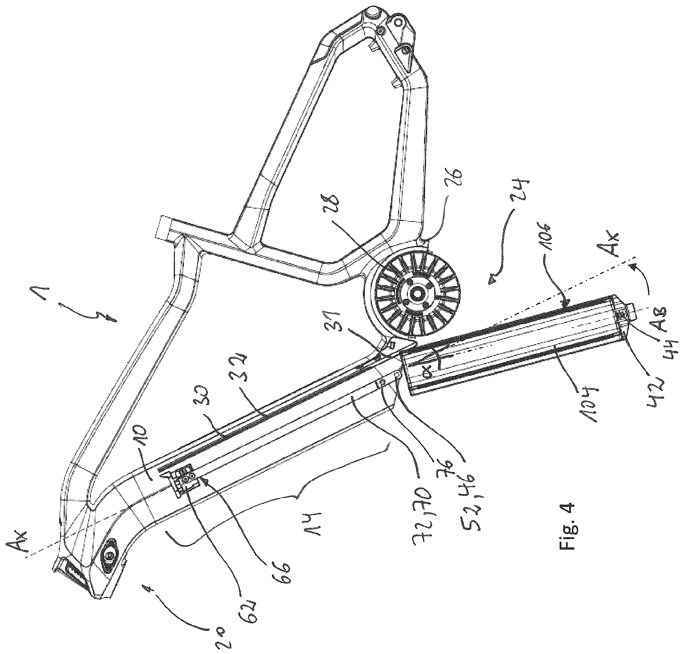

Es ist denkbar, die Batterie und den Batterieaufnahmeabschnitt 14 bzw. die Einschuböffnung 18 derart auszubilden, dass die Batterie vollständig axial, also entlang der Achse Ax in den Batterieaufnahmeabschnitt 14 eingeschoben werden kann. Es ist aber auch denkbar, dass die Batterie einen geringen Schwenkwinkel α (siehe Fig. 4) während des Einsetzens durchläuft und beim axialen Einschieben allmählich mit ihrer Haupterstreckungsachse A_{B} koaxial zur Haupterstreckungsachse Ax des Batterieaufnahmeabschnitts 14 angeordnet wird. Der Schwenkwinkel α beträgt hier vorzugsweise maximal 25°, optional maximal 15°, weiter optional maximal 5°.

Wie insbesondere in den Figuren 2 und 3 dargestellt, ist die Einschuböffnung 18 wahlweise insbesondere antriebslagerseitig, stirnseitig am Rahmenrohr 10 angeordnet. Wir dargestellt, kann sich dabei die Einschuböffnung auch teilweise in die Mantelfläche des Rahmenrohres 10 erstrecken. Insbesondere ist es möglich, dass die Stirnseite als eine orthogonal zur Haupterstreckungsachse Ax definierte Fläche angesehen wird. Weiter ist es möglich, dass die Stirnseitenfläche als eine Fläche angesehen wird, die maximal um einen Winkel β von dieser orthogonalen Fläche abweichend ausgebildet ist. Dies ist beispielsweise in Fig. 2 dargestellt. Der Winkel β beträgt hier vorzugsweise maximal ± 25°, optional maximal ± 15° und weiter optional maximal ± 5°. Insbesondere in diesem Zusammenhang ist es denkbar, dass die Mantelfläche des Rahmenrohres 10 im Bereich des Batterieaufnahmeabschnitts 14 zu wenigstens 90 %, insbesondere wenigstens 95 % geschlossen ist.

Wie insbesondere in den Figuren 3 und 4 dargestellt, ist wahlweise seitlich am Rahmenrohr 10 und im Speziellen außerhalb einer axialen Verlängerung 22 des Lichtraumprofils (siehe Fig. 3) des Batterieaufnahmeabschnitts 14 am Rahmenrohr 10 der Antriebslagerbereich 24 ausgebildet, insbesondere umfassend ein Antriebslagergehäuse 26, zur Aufnahme des Hilfsantriebs 28. Die Anordnung ist wahlweise derart gewählt, dass die Batterie 104 seitlich an einem im Antriebslagergehäuse 26 gelagerten Hilfsantrieb 28 vorbei in den Batterieaufnahmeabschnitt 14 einschiebbar ist. Selbiges gilt für ein im Lichtraumprofil ausgebildetes Antriebslagergehäuse; auch dies ist wahlweise so ausbildet und/oder angeordnet, dass eine Batterie daran vorbei in den Batterieaufnahmeabschnitt 14 eingeschoben werden kann. Das Lichtraumprofil ist hier, wie aus dem Stand der Technik bekannt, insbesondere der im Querschnitt eingeschlossene Luftraum, den die Batterie benötigt, um in den Batterieaufnahmeabschnitt eingeschoben zu werden. Insbesondere ist ein Lichtraumprofil im Umfang der Erfindung die definierte Umgrenzungslinie der senkrechten Querebene des Einschubweges der Batterie in den Batterieaufnahmeabschnitt.

Bei dieser Ausführungsform kann das Antriebslagergehäuse 26 umfangsseitig am Rahmenrohr 10 angeschlossen sein, und zwar derart, dass die Batterie seitlich daran bzw. an einem im Antriebslagergehäuse gelagerten Hilfsantrieb 28 vorbei in den Innenraum 12 einschiebbar ist.

Wie insbesondere in Fig. 1 und 2 dargestellt, kann ein Abdeckelement 36 vorgesehen sein, dass die Einschuböffnung 12 überdeckend lösbar am Rahmenrohr 10 und/oder am Antriebslagergehäuse 24 anordbar ist. Dieses Abdeckelement 36 kann insbesondere als Rammschutzelement fungieren.

Um das Einführen der Batterie 104 in den Innenraum zu erleichtern, ist erfindungsgemäß im Innenraum 12 des Rahmenrohrs 10 wenigstens ein Teil eines Batterieführungsmittels 30 angeordnet, das eine Schiebeführung zum axialen Einschieben der Batterie 104 in den Batterieaufnahmeabschnitt 14 bildet.

Erfindungsgemäß weist das Batterieführungsmittel 30 wenigstens eine Führungsfeder 32 auf, die beispielsweise integral am Rahmenrohr 10 ausgebildet ist. Komplementär zur Führungsfeder 32 ist in der Batterie 104 wenigstens eine dazu wenigstens abschnittsweise komplementär ausgebildete Führungsnut 106 ausgebildet. Führungsfeder 32 und Führungsnut 106 greifen derart ineinander ein, dass beim axialen Einschieben der Batterie in den Batterieaufnahmeabschnitt 14 die Batterie sicher in den Innenraum 12 des Rohres 10 geführt wird.

Neben der Führungsfeder 32 können auch weitere Führungselemente 34 (siehe z.B. Fig. 9) am Rahmenrohr 10 bzw. anderen Bauteilen des Fahrradrahmens 1 ausgebildet sein, die eine Führung der Batterie in das und im Rahmenrohr garantieren. Diese Führungselemente 34 können darüber hinaus als Lagerelemente und, wie im Folgenden noch im Detail beschrieben, als Batterie-Temporärhaltemittel 54 ausgebildet sein.

Wie insbesondere in den Figuren 3 bis 7 dargestellt, ist das Batterieführungsmittel und insbesondere die Führungsfeder 32 auch über die Einschuböffnung 18 aus dem Batterieaufnahmeabschnitt 14 und insbesondere dem Innenraum 12 des Rahmenrohres 10 axial nach außen ragend ausgebildet. Auf diese Weise kann, dies ist beispielsweise auch in Fig. 4 dargestellt, die Batterie sehr einfach in die Führungskopplung, zwischen der Führungsfeder 32 und der Führungsnut 106 eingesetzt werden.

Grundsätzlich ist es denkbar, eine Mehrzahl an Führungsfedern und Führungsnuten vorzusehen und diese wahlweise am Rahmenrohr bzw. der Batterie auszubilden.

Auch ist es denkbar, dass das Batterieführungsmittel insbesondere in dem nach außen ragenden Bereich ein insbesondere geneigtes Leitelement 31 aufweist, um die Batterie und das daran angeordnete Führungsmittel, hier beispielsweise eine Führungsnut in den Kopplungseingriff mit dem korrespondierenden Gegenführungsmittel, beispielsweise der Führungsfeder 32, zu bringen. Eine solche Ausführungsform ist in Fig. 4 dargestellt. Das Leitelement kann auch wenigstens einen Teil der Führungsfeder selbst bilden.

Wie im Detail in Fig. 9 dargestellt, kann im Innenraum 12 des Rahmenrohres 10 wenigstens eine Kabelzugführung 56, 57 vorgesehen sein, um Kabelzüge im Inneren des Rahmenrohres 10 zu führen. Diese Kabelzüge können beispielsweise Leitungen, Schaltzüge, Bremszüge der dergleichen Elemente sein, wie dies bereits weiter oben definiert wurde. Es ist möglich, solche Kabelzugführungen als offene Kabelzugführungen 56 vorzusehen bzw. als geschlossene Kabelzugführungen 57 vorzusehen. Gerade die offenen Kabelzugführungen 56 erlauben das Führen von Kabelzügen mit großen Steckern oder dergleichen Endelementen, da diese optional insbesondere orthogonal zur Haupterstreckungsachse Ax in diese Kabelzugführung 56 eingeführt werden können. Grundsätzlich, aber insbesondere bei den offenen Kabelzugführungen 56 ist vorzugsweise ein Klemmmittel vorgesehen, um die darin geführten Kabelzüge sicher und insbesondere vibrationsresistent zu halten.

Wie insbesondere in den Figuren 3 bis 7 dargestellt, umfasst der Fahrradrahmen optional auch ein Batteriearretierungsmittel 40, das wahlweise im Innenraum 12 des Rahmenrohres 10 vorgesehen ist. Dieses Batteriearretierungsmittel 40 dient dem Arretieren der Batterie 104 im Batterieaufnahmeabschnitt 14. Es umfasst optional eine Stirnseitenkappe 42, die über die Einschuböffnung 18 in den Innenraum 12 des Rahmenrohres 10 einsetzbar und dort lösbar verriegelbar ist. Auf diese Weise kann eine in den Batterieaufnahmeabschnitt 14 eingeschobene Batterie 104 insbesondere gegen ein axiales Herausschieben verriegelt werden. Die Stirnseitenkappe ist im Detail auch in Fig. 10 dargestellt.

Die Stirnseitenkappe 42 weist wenigstens ein Verriegelungsmittel 44 und das Rahmenrohr 10 wenigstens ein Verriegelungsgegenmittel 46 auf, oder umgekehrt. Die Mittel sind mittels eines Betätigungsmittels 50 miteinander unter Verriegelung der Batterie 104 im Batterieaufnahmeabschnitt 14 miteinander in eine Verriegelungsstellung und unter Freigabe der Batterie 104 im Batterieaufnahmeabschnitt 14 in eine Entriegelungsstellung bringbar.

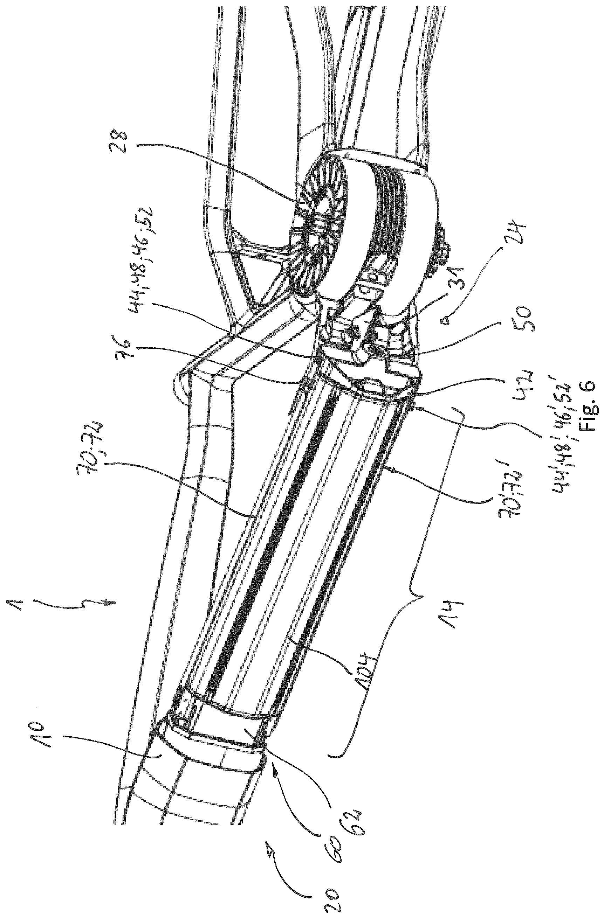

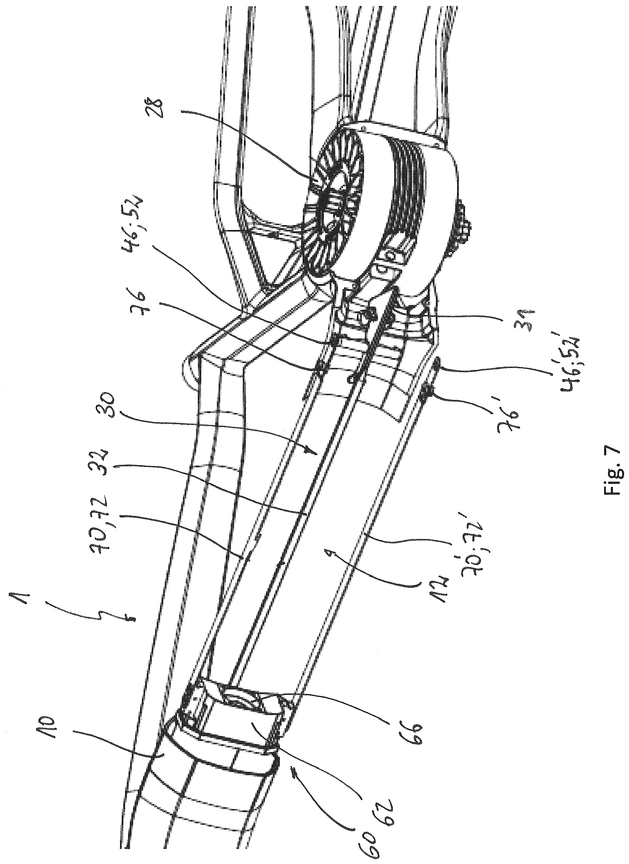

Wie insbesondere in Fig. 10 dargestellt, kann das Verriegelungsmittel 44 wenigstens einen Sperrbolzen 48 aufweisen und das Verriegelungsgegenmittel 46 (siehe hierzu die Figuren 6 und 7) wenigstens eine komplementäre Sperrbolzenaufnahme 52, oder umgekehrt. Der Sperrbolzen 48 kann in Verriegelungsstellung die Stirnseitenkappe 42 verriegelnd in die Sperrbolzenaufnahme 52 eingreifen und in Entriegelungsstellung die Stirnseitenkappe 42 entriegelnd außer Eingriff mit der Sperrbolzenaufnahme stehen. Das hierzu genannte Betätigungsmittel 50 kann beispielsweise eine Federvorspanneinrichtung umfassen, die die Sperrbolzen in die Verriegelungsstellung vorspannt (nicht dargestellt). Wie insbesondere in Fig. 10 dargestellt, können bei einer bestimmten Ausführungsform die Sperrbolzen 48 orthogonal zur Haupterstreckungsachse A_{B} der Batterie hervorstehend und insbesondere elastisch gelagert sein.

Optional weist die Stirnseitenkappe 42 wenigstens einen Teil des Batterieführungsmittels und insbesondere eine Führungsnut 38 und/oder eine Führungsfeder auf.

Verriegelungsmittel und Verriegelungsgegenmittel sind bei einer solchen Ausführungsform vorzugsweise so ausgebildet, dass die Sperrbolzen beim Einschieben kurzzeitig in die Entriegelungsstellung zurückgedrängt werden, um dann wieder in die Verriegelungsstellung zurückzuspringen und insbesondere in die Sperrbolzenaufnahme 52 einzugreifen. Auch ist es denkbar, die Sperrbolzen so auszubilden, dass sie über ein Betätigungsmittel 50 aufweisend einen Hebel, einen Schlüssel oder einen dergleichen Aktuator, wie oben bereits beschrieben, von der Verriegelungsstellung in die Entriegelungsstellung bewegt werden können, um das Einschieben der Batterie in den Batterieaufnahmeabschnitt, optional ohne mit den Sperrbolzenaufnahmen 52 in Kontakt zu kommen bzw. darin einzurasten, zu ermöglichen. Auf ähnliche Weise kann das Betätigungsmittel zur Entriegelung ausgebildet sein, um die in den Sperrbolzenaufnahmen eingerasteten Sperrbolzen wieder in die Entriegelungsstellung zurückzudrängen und so eine Entnahme der Batterie und insbesondere der Stirnseitenkappe 42 zu erlauben. Hier sind sämtliche aus dem Stand der Technik bekannte Verfahren anwendbar.

Grundsätzlich ist es denkbar, Verriegelungsmittel und Verriegelungsgegenmittel mittels des Betätigungsmittels steuerbar auszubilden, um wahlweise eine Verriegelungsstellung, eine Entriegelungsstellung und/oder beides aktiv einnehmen zu können.

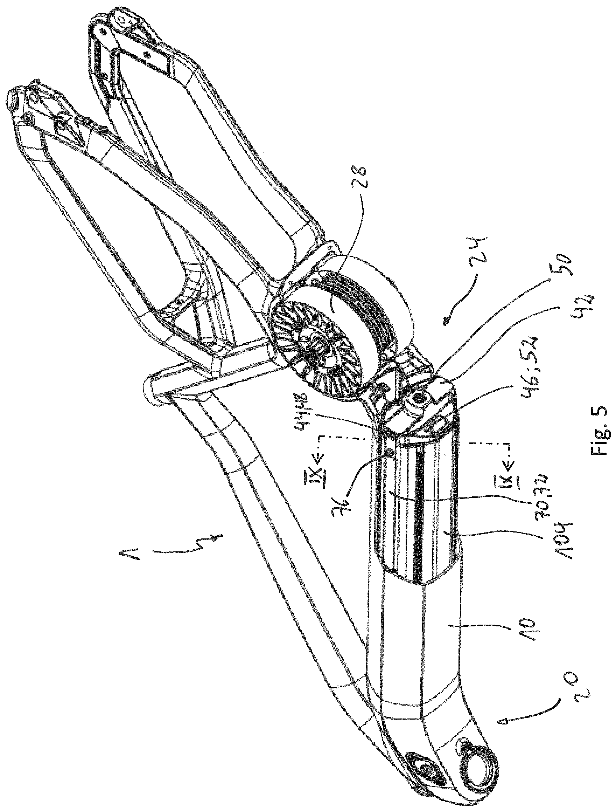

Wie insbesondere in den Figuren 5 bis 9 dargestellt, kann der Fahrradrahmen insbesondere im Innenraum 12 des Rahmenrohres 10 mit einem Schienensystem 70 versehen sein bzw. ein solches in diesen einführbar sein. Das Schienensystem weist optional wenigstens eine Schiene 72 auf, die insbesondere axial in eine, wahlweise integral, am Rahmenrohr 10 ausgebildete komplementäre Schienenaufnahme 74 einschiebbar ist. Das Schienensystem 70 kann wahlweise am Rahmenrohr 10 mittels eines Festlegemittels 76 und insbesondere einer Schraube gegen eine axiale Bewegung festlegbar sein. Dies ist beispielsweise u.a. in Fig. 6 dargestellt.

Das Schienensystem 70 kann erfindungsgemäß zur Aufnahme eines Batteriearretierungsmittels 40 und/oder eines Batterieführungsmittels 30 und/oder eines Batterieanschlussmittels 60 und/oder eines Batterie-Temporärhaltemittels 54 ausbildet sein oder ein solches aufweisen. Insbesondere ist es möglich, das Schienensystem 70 derart auszubilden, dass es zusammen mit all diesen Mitteln bzw. wenigstens Teilen davon in den Innenraum 12 des Rahmenrohres 10 einschiebbar ist. Das Batteriearretierungsmittel 40 und das Batterieführungsmittel 30 wurden zuvor schon exemplarisch beschrieben.

In Ergänzung dazu gilt, dass optional an den Schienen 72 des Schienensystems 70 insbesondere im Bereich der Einschuböffnung 18 Verriegelungsgegenmittel 46, beispielsweise in Form von Sperrbolzenaufnahmen 52 vorgesehen sind. Um Batterien mit unterschiedlichen Größen mit dem Batteriearretierungsmittel 40 zu verriegeln, können entlang der Schiene 72 unterschiedliche Verriegelungsgegenmittel vorgesehen sein, um so bei unterschiedlichen insbesondere unterschiedlich langen Batterien und/oder unterschiedlich ausgebildeten Verriegelungsmitteln 44 eine Arretierung zu erlauben.

Es ist denkbar, neben oder alternativ zum Batteriearretierungsmittel 40, vorgesehen mit einer Stirnseitenkappe 42, auch andere Batteriearretierungsmittel vorzusehen, die eine Festlegung der Batterie im Batterieaufnahmeabschnitt 14 erlauben. So kann beispielsweise das Batteriearretierungsmittel 40 einen Sperrriegel umfassen, der verschwenkbar am Rahmenrohr und/oder an der Batterie gelagert ist und ein Verriegeln der Batterie im Rahmenrohr erlaubt. Der Sperrriegel kann als Verriegelungsmittel verschwenkbar am Rahmenrohr und/oder der Batterie gelagert sein und in Verriegelungsstellung gegen ein oder in ein Verriegelungsgegenmittel, beispielsweise eine Stirnseite der Batterie bzw. eine komplementäre Aufnahme am Rahmenrohr anstehen.

Im Folgenden wird auf das Batterieanschlussmittel 60 abgestellt, das beispielsweise u.a. in den Figuren 6, 7 und 10 dargestellt ist. Das Batterieanschlussmittel umfasst vorzugsweise und optional im Bereich des zum Lenkkopfbereich 20 weisenden Endes des Rahmenrohres 10 und insbesondere angrenzend an den Batterieaufnahmeabschnitt 14 einen Batteriehub 62 auf, zum Anschluss der in den Batterieaufnahmeabschnitt 14 eingeschobenen Batterie 104. Der Batteriehub 62 wird dabei vorzugsweise am Schienensystem 70 befestigt, sodass er mit diesem zusammen in den Innenraum 12 des Rahmenrohres 10 eingeschoben werden kann, um dort zu verbleiben und mit der Batterie 104, die in den Batterieaufnahmeabschnitt 14 eingeschoben wird, gekoppelt zu werden. Der Batteriehub 62 kann dabei beispielsweise einen Stecker 66 (siehe Fig. 7) aufweisen, der komplementär zu einer Steckeraufnahme 64 (siehe Fig. 10) ausgebildet ist und die Kopplung zwischen Batteriehub 62 und Batterie 104 erlaubt. Stecker bzw. Steckeraufnahme sind dabei vorzugsweise so ausgebildet, dass sie eine magnetische Haftkraft bilden und so beispielsweise die Batterie 104 temporär im Batterieaufnahmeabschnitt 14 insbesondere gegen Einwirken der Schwerkraft in der Entriegelungsstellung klemmfixiert lagern. Bei einer solchen Ausbildungsform ist die temporäre Haftkraft bzw. Verriegelungskraft derart ausgebildet, dass sie manuell durch einen Benutzer über eine Zugkraft entgegengesetzter Richtung zur Einschubrichtung Rx der Batterie in den Batterieaufnahmeabschnitt 14 überwunden werden kann. Die temporäre Batteriesicherung dient dabei vorzugsweise dem bequemen Verriegeln der Batterie 104 im Rahmenrohr 10. Insbesondere bei einer solchen Ausführungsform bildet das Batterieanschlussmittel 60 optional auch das Batterie-Temporärhaltemittel 54.

Es ist auch möglich, das Batterie-Temporärhaltemittel 54 mittels eines Klemmsystems auszubilden, das die Batterie 104 im Batterieaufnahmeabschnitt 14 gegen Einwirken der Schwerkraft in der Entriegelungsstellung klemmfixiert hält. Dies kann beispielsweise durch entsprechend ausgebildete Schienen 72 des Schienensystems 70 erfolgen, die direkt oder indirekt mit einer Klemmkraft, eine Haftkraft resultierend, an der Batterie 104 anliegen. Selbiges kann auch über entsprechend ausgebildete Batteriehaltemittel 54, beispielsweise integral am Rahmenrohr ausgebildet, erreicht werden. Diese sind beispielsweise in Fig. 9 dargestellt. Solche Batteriehaltemittel sind vorzugsweise elastisch ausgebildet. Vorzugsweise sind solche Batterie-Temporärhaltemittel als elastische Temporärhaltemittel und insbesondere Klemmmittel ausgebildet. Zudem können sie als Batterieführungsmittel und Batterielagermittel ausgebildet sein.

Wie in Fig. 1 dargestellt, umfasst der erfindungsgemäße Fahrradrahmen 1 optional wenigstens ein im Ausfallende 8 integriertes Lichtelement 80 und weiter optional ein inkrementelles Messwegesystem, mit wenigstens einem, hier beispielsweise am Vorderrad 3 angeordneten Messring 92 als Teil des inkrementellen Wegemesssystems, beispielsweise für eine Tachometereinheit. Es ist denkbar dieses Messwegesystem und insbesondere den Messring auch oder alternativ im Bereich des Hinterrades anzuordnen.

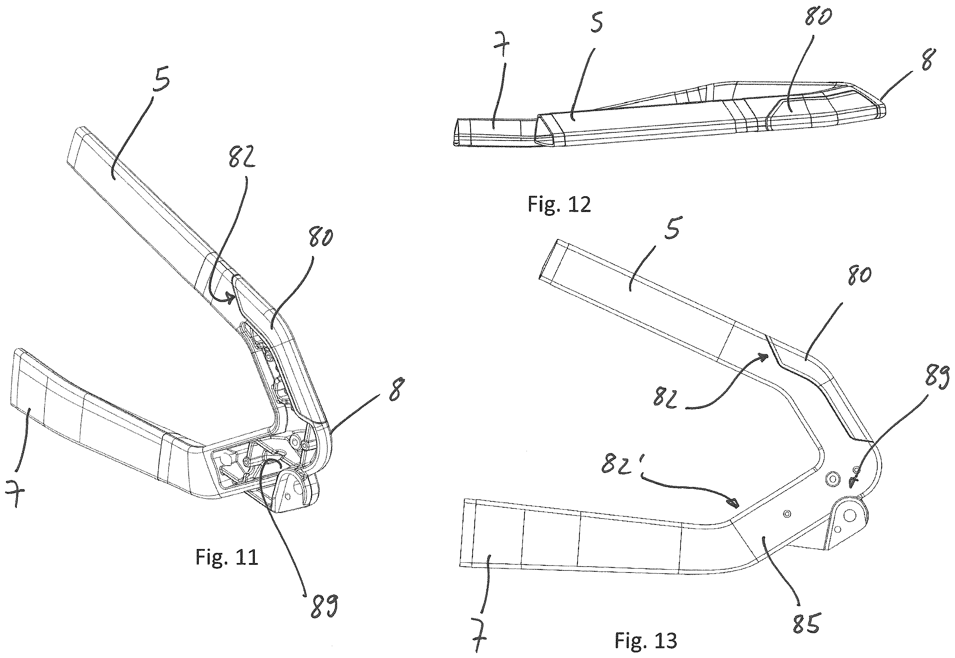

Auf diese beiden Eigenarten wird in den Figuren 11 bis 17 im Detail eingegangen.

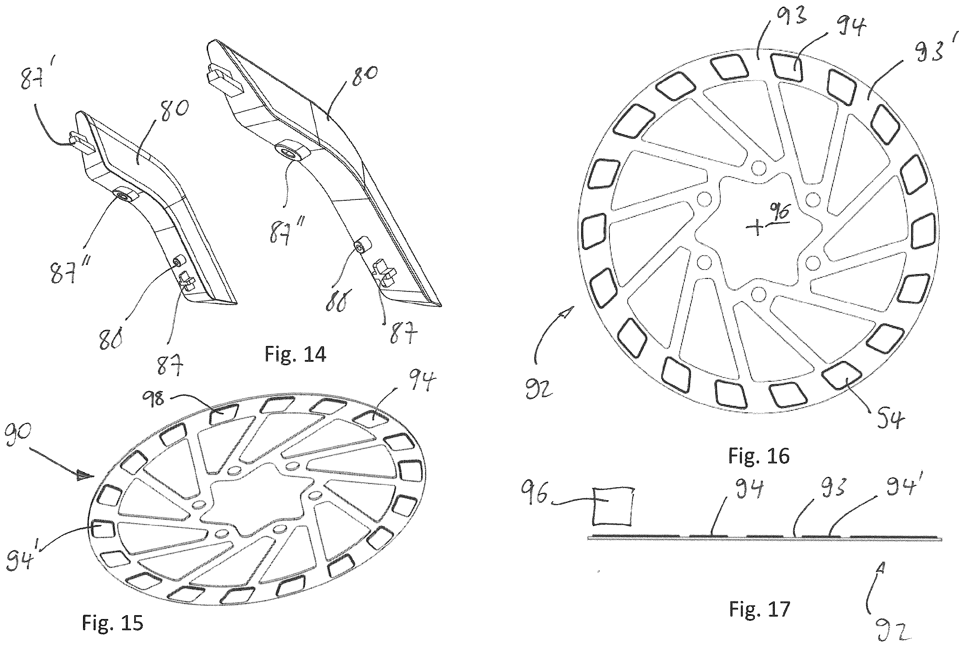

Die Figuren 11 bis 14 zeigen im Detail wenigstens ein in Fig. 1 dargestelltes, im Ausfallende 8 integriertes Lichtelement 80. Es sei erwähnt, dass ein solches Lichtelement 80 nicht nur in Verbindung mit dem hier dargestellten Fahrradrahmen 1, sondern mit jeder Art von Fahrradrahmen ihre Anwendung finden kann. Das Lichtelement 80 ist hier in das Ausfallende 8 und insbesondere oberflächenbündig in das Ausfallende 8 integriert. Dazu weist das Ausfallende 8 eine Aussparung 82 auf, in die das Lichtelement 80 eingesetzt und mittels Befestigungselementen fixiert werden kann. Der Zugang zum Montagebereich kann optional durch ein Abdeckelement 85 abgedeckt werden, wie dies in Fig. 13 dargestellt ist Die Befestigungselemente greifen vorzugsweise in Befestigungselementaufnahmen 88 ein (siehe Fig. 14, exemplarisch darstellend eine linksseitige und eine rechtsseitige Ausführungsform des Lichtelementes 80 zum Einsetzten in ein linksseitiges und ein rechtsseitiges Ausfallende 8). Die Befestigungselemente können optional Schrauben sein. Weiter vorgesehen sind Führungen 87, die in entsprechende Führungsaufnahmen (nicht dargestellt) am Ausfallende 8 eingreifen und so eine Vorpositionierung des Lichtelements 80 in der Aussparung 82 erlauben.

Das Lichtelement 80 ist vorzugsweise derart ausgebildet, dass es von der Fahrradrückseite, aber auch seitlich zum Fahrrad erkennbar ist. Vorzugsweise ist es oberhalb der Achsaufnahme 89 zur Aufnahme des Hinterrades 6 angeordnet. Optional sind linksseitige und rechtsseitige Lichtelemente eines Fahrradrahmens identisch ausgebildet.

Das Lichtelement 80 kann beispielsweise als Rücklicht, als Bremslicht, aber auch als Blink- oder dergleichen Licht ausgeführt werden, um eine Signalisierung beim Betrieb des Fahrrades zu erlauben.

Insbesondere in Verbindung mit einem batteriebetriebenen Fahrrad 100, wie es in Fig. 1 dargestellt ist, hat ein solches in das Ausfallende 8 eingebundene Lichtelement 80 eine vorteilhafte Funktion.

Wie weiter in Fig. 1 dargestellt, umfasst das Fahrrad 100 wahlweise ein inkrementelles Wegemesssystem, dessen Teil ein Messring 92 und ein damit operierendes Sensormittel 96. Es sei darauf hingewiesen, dass ein solches Messsystem und insbesondere der Messring 92, hier exemplarisch auf einer Bremsscheibe 90 befestigt, nicht nur bei dem erfindungsgemäßen Fahrrad 100, sondern bei jeder Art von Fahrrad angewendet werden können. Wie erwähnt ist optional auf der hier dargestellten Bremsscheibe 90 der Messring 92 ausgebildet oder befestigt. Der Messring 92 ist optional rotationssymmetrisch zu einer Achsmitte 96 ausgebildet, die im montierten Zustand am Fahrradvorderreifen 3 co-axial zur Montageachse (nicht dargestellt) angeordnet ist. Der Messring 92 weist eine Mehrzahl an Messerhebungen 94 auf, die in Form von Ausprägungen aus dem Messring 92 hervorstehen und optional im montierten Zustand (siehe Fig. 1) in Richtung eines Sensormittels 96 weisen bzw. in geringeren Abstand an diesem vorbeirotieren als deren Umrandungen 93. Es ist optional auch möglich, die Erhebungen in eine vom Sensormittel 96 wegweisenden Richtung auszubilden, so dass in Rotation die Umrandungen 93, Umlaufend die Erhebungen 94 näher am Sensormittel 96 liegen als die Erhebungen.

Das Sensormittel ist dazu ausgebildet, die Erhebungen 94 bzw. bei der anderen zuvor erwähnten Ausführungsform die Umrandungen 93 während ihrer Rotation am Messsensor 96 vorbei zu detektieren. Aus dem Stand der Technik ist es bekannt, ein solches inkrementelles Messwegesystem mittels eines Messrings zur Verfügung zu stellen, bei der der Messring Aussparungen aufweist und der Messsensor diese Aussparungen bzw. die Stege zwischen den Aussparungen detektiert. Ein solches Messsystem ist jedoch fehleranfällig; es galt, es zu verbessern.

Das nunmehr vorgestellt inkrementelle Messwegesystem umfassend den Messring 92 und die darauf ausgebildeten Erhebungen 94 stellt ein sehr viel besseres und zuverlässigeres System zur Verfügung.

Insbesondere ist es denkbar, dass wenigstens eine Erhebung 94 größer oder kleiner ausgebildet ist als die restlichen Erhebungen. Es stellt somit ein Eichelement 98 zur Verfügung, das insbesondere eine Manipulation der Messergebnisse verhindern kann. So kann beispielsweise durch eine entsprechend zugeordnete Auslöseeinheit, beispielsweise am Tacho 99 des Fahrrades (siehe beispielsweise Fig. 1), ein Messverfahren initiiert werden, bei dem die Umdrehungen der Messrings 92 anhand des Durchlaufs des Eichelements 98 gezählt werden. Eine Manipulation des Geschwindigkeitsmesssystems kann so erschwert werden. Insbesondere im Zusammenhang mit einem batteriebetriebenen Fahrrad gemäß der vorliegenden Anmeldung haben ein solches inkrementelles Wegemesssystem und insbesondere die Messring 92 einen besonderen Vorteil. Die größere Ausbildung wenigstens einer Erhebung 94 bzw. des Eichelementes 98 bezieht sich hier optional auf die Länge in Umfangsrichtung, also die Länge, die am Sensormittel während der Rotation vorbeiläuft. Optional ist also das Eichelement 98 in Umfangsrichtung betrachtet länger als die restlichen Erhebungen 94 und insbesondere um wenigstens 5%, weiter optional um wenigstens 10% länger.

Bei der Interpretation der beiliegenden Ansprüche gilt, dass das Wort "umfassend" das Vorhandensein anderer Elemente oder Aktionen als diejenigen, die in einem bestimmten Anspruch aufgeführt sind, nicht ausschließt; das Wort "ein" oder "einer/eine/eines", das einem Element vorausgeht, soll das Vorhandensein einer Mehrzahl solche Elemente nicht ausschließen; jegliche Bezugszeichen in den Ansprüchen schränken ihren Umfang nicht ein. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

## Patentansprüche

1. Fahrradrahmen (1) für ein Fahrrad (100) mit batteriebetriebenem Hilfsantrieb (28), umfassend wenigstens ein Rahmenrohr (10), insbesondere ein Unterrohr, das zwischen einem Lenkkopfbereich (20) und einem Antriebslagerbereich (24) verläuft, und das in seinem Innenraum (12) einen axial verlaufenden Batterieaufnahmeabschnitt (14) aufweist, zur Aufnahme einer Batterie (104), insbesondere für den Hilfsantrieb (28), wobei der Batterieaufnahmeabschnitt (14) eine stirnseitig (16) verlaufende Einschuböffnung (18) aufweist über die die Batterie (104) mit ihrer Stirnseite (102) voraus in den Batterieaufnahmeabschnitt (14) einschiebbar ist, wobei im Innenraum (12) des Rahmenrohres (10) wenigstens ein Teil eines Batterieführungsmittel (30) angeordnet ist, das eine Schiebeführung zum axialen Einschieben der Batterie (104) in den Batterieaufnahmeabschnitt (14) bildet, wobei das Batterieführungsmittel (30) wenigstens eine optional integral am Rahmenrohr (10) ausgebildete Führungsfeder (32) und die Batterie (104) wenigstens eine dazu wenigstens abschnittsweise komplementäre Führungsnut (106) aufweisen, oder umgekehrt,
**dadurch gekennzeichnet, dass**
die am Rahmenrohr (10) ausgebildete Führungsfeder (32) bzw. die am Rahmenrohr (10) ausgebildete Führungsnut über die Einschuböffnung (18) aus dem Batterieaufnahmeabschnitt (14) und insbesondere dem Innenraum (12) axial nach Außen ragt.

2. Fahrradrahmen nach Anspruch 1,
**dadurch gekennzeichnet, dass**
die Batterie (104) entlang einer Einschubrichtung (R_{X}) axial zur Haupterstreckungsachse (A_{X}) des Batterieaufnahmeabschnitts (14) in den Batterieaufnahmeabschnitt (14) einschiebbar ist.

3. Fahrradrahmen nach einem der vorhergehenden Ansprüche,
**dadurch gekennzeichnet, dass**
die Einschuböffnung (18) wenigstens teilweise insbesondere Antriebslagerseitig stirnseitig am Rahmenrohr (10) angeordnet ist.

4. Fahrradrahmen nach einem der vorhergehenden Ansprüche,
**dadurch gekennzeichnet, dass**
die Mantelfläche des Rahmenrohres (10) im Bereich des Batterieaufnahmeabschnitts (14) zu wenigstens 90%, insbesondere wenigstens 95% geschlossen ist.

5. Fahrradrahmen nach einem der vorhergehenden Ansprüche,
**dadurch gekennzeichnet, dass**
seitlich am Rahmenrohr und im speziellen außerhalb einer axialen Verlängerung (22) des Lichtraumprofils des Batterieaufnahmeabschnitts (14) am Rahmenrohr (10) der Antriebslagerbereich (24) ausgebildet ist, insbesondere umfassend ein Antriebslagergehäuse (26), zur Aufnahme des Hilfsantriebs (28), und zwar derart, dass die Batterie (104) seitlich an dem im Antriebslagergehäuse (26) gelagerten Hilfsantrieb (28) vorbei in den Batterieaufnahmeabschnitt (14) einschiebbar ist.

6. Fahrradrahmen nach einem der vorhergehenden Ansprüche,
**dadurch gekennzeichnet, dass**
insbesondere im Innenraum (12) des Rahmenrohres (10) wenigstens ein Batteriearretierungsmittel (40) vorgesehen ist, zum Arretieren der Batterie (104) im Batterieaufnahmeabschnitt (14), insbesondere umfassend eine Stirnseitenkappe (42), die über die Einschuböffnung (18) in den Innenraum (12) des Rahmenrohres (10) einsetzbar und dort lösbar verriegelbar ist und so eine in den Batterieaufnahmeabschnitt (14) eingeschobene Batterie (104) insbesondere gegen ein axiales Herausschieben verriegelt.

7. Fahrradrahmen nach Anspruch 6,
**dadurch gekennzeichnet, dass**
die Stirnseitenkappe (42) wenigstens ein Verriegelungsmittel (44) und das Rahmenrohr (10) wenigstens ein Verriegelungsgegenmittel (46) aufweisen, oder umgekehrt, die mittels eines Betätigungsmittels (50) miteinander unter Verriegelung der Batterie (104) im Batterieaufnahmeabschnitt (14) in eine Verriegelungsstellung und unter Freigabe der Batterie (104) im Batterieaufnahmeabschnitt (14) in eine Entriegelungsstellung bringbar sind.

8. Fahrradrahmen nach Anspruch 7,
**dadurch gekennzeichnet, dass**
das Verriegelungsmittel (44) wenigstens einen Sperrbolzen (48) aufweist, und das Verriegelungsgegenmittel (46) wenigstens eine komplementäre Sperrbolzenaufnahme (52) aufweist, oder umgekehrt, wobei der Sperrbolzen (48) in Verriegelungsstellung die Stirnseitenkappe (42) verriegelnd in die Sperrbolzenaufnahme (52) eingreift und in Entriegelungsstellung die Stirnseitenkappe (42) entriegelnd außer Eingriff mit der Sperrbolzenaufnahme (52) steht.

9. Fahrradrahmen nach einem der Ansprüche 7 oder 8, wenn abhängig von Anspruch 2,
**dadurch gekennzeichnet, dass**
insbesondere im Innenraum (12) des Rahmenrohres (10) wenigstens ein Batterie-Temporärhaltemittel (54) und insbesondere ein Batterieklemmsystem derart vorgesehen ist, dass die Batterie (104) im Batterieaufnahmeabschnitt (14) gegen Einwirken der Schwerkraft in der Entriegelungsstellung klemmfixiert gelagert aber manuell durch einen Benutzer über ein Zugkraft entgegengesetzt zur Einschubrichtung (R_{X}) herausziehbar ist.

10. Fahrradrahmen nach einem der vorhergehenden Ansprüche,
**dadurch gekennzeichnet, dass**
insbesondere im Innenraum (12) des Rahmenrohres (10) wenigstens ein Batterieanschlussmittel (60) vorgesehen ist, das insbesondere im Bereich des zum Lenkkopfbereich (20) weisenden Endes des Rahmenrohres (10) und insbesondere angrenzend an den Batterieaufnahmeabschnitt (14) einen Batteriehub (62) aufweist, zum Anschluss der in den Batterieaufnahmeabschnitt (14) eingeschobenen Batterie.

11. Fahrradrahmen nach einem der vorhergehenden Ansprüche,
**dadurch gekennzeichnet, dass**
insbesondere im Innenraum (12) des Rahmenrohres (10) ein Schienensystem (70) ausgebildet ist und/oder in diesen einführbar ist, das wenigstens eine Schiene (72) aufweist, die insbesondere axial in eine, wahlweise integral am Rahmenrohr (10) ausgebildete komplementäre Schienenaufnahme (74) einschiebbar ist, wobei das Schienensystem (70) wahlweise am Rahmenrohr (10) mittels eines Festlegemittels (76)
gegen eine Axial-Bewegung festlegbar ist, und wobei das Schienensystem (70) zur Aufnahme eines Batteriearretierungsmittels (40) und/oder eines Batterieführungsmittels (30) und/oder eines Batterieanschlussmittels (60) und/oder eines Batterie-Temporärhaltemittels (54) ausgebildet ist oder ein solches aufweist.

12. Fahrradrahmen nach Anspruch 11,
**dadurch gekennzeichnet, dass**
das Schienensystem (70) derart ausgebildet ist, dass es zusammen mit wenigstens Teilen des Batteriearretierungsmittels (40) und/oder des Batterieführungsmittels (30) und/oder des Batterieanschlussmittels (60) und/oder des Batterie-Temporärhaltemittels (54) in den Innenraum (12) des Rahmenrohres (10) einschiebbar ist.

13. Fahrrad mit einem batteriebetriebenem Hilfsantrieb und einem Fahrradrahmen nach einem der vorhergehenden Ansprüche.

## Claims

1. Bicycle frame (1) for a bicycle (100) with battery-activated auxiliary drive (28), comprising at least one frame tube (10), in particular a down tube, which runs between a steering head area (20) and a drive bearing area (24), and which in its interior (12) has an axially extending battery holder section (14) for holding a battery (104), in particular for the auxiliary drive (28), wherein the battery holder section (14) has an insertion opening (18) extending frontally (16) through which the battery (104) can be inserted with its front side (102) first into the battery holder section (14), wherein in the interior (12) of the frame tube (10) at least part of a battery guiding means (30) is arranged, which forms a sliding guide for axially inserting the battery (104) into the battery holder section (14), wherein the battery guiding means (30) has at least one guiding tongue (32), optionally formed integrally at the frame tube (10), and the battery (104) has at least one guiding groove (106) which is complementary thereto at least in sections, or vice versa,
**characterised in that**
the guiding tongue (32) formed at the frame tube (10) or the guiding groove formed at the frame tube (10), respectively, protrudes axially outward via the insertion opening (18) from the battery holder section (14) and in particular from the interior space (12).

2. Bicycle frame according to claim 1,
**characterised in that**
the battery (104) can be pushed into the battery holder section (14) along an insertion direction (Rx) axially to the main extension axis (Ax) of the battery holder section (14).

3. Bicycle frame according to any one of the preceding claims,
**characterised in that**
the insertion opening (18) is at least partially arranged frontally at the frame tube (10), in particular at the drive bearing side.

4. Bicycle frame according to any one of the preceding claims,
**characterised in that**
the outer surface of the frame tube (10) in the area of the battery holder section (14) is at least 90%, in particular at least 95%, closed.

5. Bicycle frame according to any one of the preceding claims,
**characterised in that**
the drive bearing area (24) is formed laterally at the frame tube and in particular outside an axial extension (22) of the clearance profile of the battery holder section (14) at the frame tube (10), in particular comprising a drive bearing housing (26) for holding the auxiliary drive (28), and in such a way that the battery (104) can be pushed laterally past the auxiliary drive (28) mounted in the drive bearing housing (26) into the battery holder section (14).

6. Bicycle frame according to any one of the preceding claims,
**characterised in that**
in particular in the interior (12) of the frame tube (10) at least one battery locking means (40) is provided for locking the battery (104) in the battery holder section (14), in particular comprising an end cap (42) which can be inserted via the insertion opening (18) into the interior (12) of the frame tube (10) and can be releasably locked there and thus locks a battery (104) inserted into the battery holder section (14), in particular against being axially pushed out.

7. Bicycle frame according to claim 6,
**characterised in that**
the end cap (42) has at least one locking means (44) and the frame tube (10) has at least one counter-locking means (46), or vice versa, which, by means of an actuating means (50), can be brought into a locking position in the battery holder section (14) with the locking of the battery (104) and can be brought into an unlocking position in the battery holder section (14) with the release of the battery (104).

8. Bicycle frame according to claim 7,
**characterised in that**
the locking means (44) has at least one locking pin (48), and the counter-locking means (46) has at least one complementary locking pin receptacle (52), or vice versa, wherein the locking pin (48) in the locking position engages the end cap (42) into the locking pin receptacle (52) in a locking manner and in the unlocking position disengages the end cap (42) from the locking pin receptacle (52) in an unlocking manner.

9. Bicycle frame according to any one of claims 7 or 8, when dependent on claim 2,
**characterised in that**
in particular in the interior (12) of the frame tube (10) at least one temporary battery holding means (54) and in particular a battery clamping system is provided in such a way that the battery (104) is mounted in the battery holder section (14) clamped against the action of gravity in the unlocking position, but can be pulled out manually by a user by using a pulling force opposite to the insertion direction (Rx).

10. Bicycle frame according to any one of the preceding claims,
**characterised in that**
in particular in the interior (12) of the frame tube (10) at least one battery connection means (60) is provided, which has a battery hub (62) in particular in the area of the end of the frame tube (10) facing the steering head area (20) and in particular adjacent to the battery holder section (14) for connecting the battery inserted into the battery holder section (14).

11. Bicycle frame according to any one of the preceding claims,
**characterised in that**
in particular, a rail system (70) is formed in the interior (12) of the frame tube (10) and/or can be inserted into it, which has at least one rail (72) which can be inserted in particular axially into a complementary rail holder (74) optionally formed integrally at the frame tube (10), wherein the rail system (70) can optionally be fixed against an axial movement at the frame tube (10) by means of a fixing means (76), and wherein the rail system (70) is designed to be or has a battery locking means (40) and/or a battery guiding means (30) and/or a battery connection means (60) and/or a temporary battery holding means (54).

12. Bicycle frame according to claim 11,
**characterised in that**
the rail system (70) is designed such that it can be inserted into the interior (12) of the frame tube (10), together with at least parts of the battery locking means (40) and/or the battery guiding means (30) and/or the battery connection means (60) and/or the temporary battery holding means (54).

13. Bicycle with a battery-activated auxiliary drive and a bicycle frame according to any one of the preceding claims

## Revendications

1. Cadre de bicyclette (1) pour une bicyclette (100) pourvue d'un entraînement auxiliaire (28) fonctionnant sur batterie, comprenant au moins un tube de cadre (10), en particulier un tube de pédalier, qui s'étend entre une zone de tête de direction (20) et une zone de palier d'entraînement (24) et qui présente une section de réception de batterie (14) s'étendant axialement dans son espace intérieur (12), pour recevoir une batterie (104), en particulier pour l'entraînement auxiliaire (28), dans lequel la section de réception de batterie (14) présente une ouverture d'insertion (18) s'étendant frontalement (16) et par l'intermédiaire de laquelle la batterie (104) peut être introduite dans la section de réception de batterie (14) avec sa face frontale (102) devant, dans lequel au moins une partie d'un moyen de guidage de batterie (30) est agencée dans l'espace intérieur (12) du tube de cadre (10), qui forme un guide de coulissement pour une introduction axiale de la batterie (104) dans la section de réception de batterie (14), dans lequel le moyen de guidage de batterie (30) présente au moins un ressort de guidage (32) facultativement formé d'un seul tenant sur le tube de cadre (10), et la batterie (104) présente au moins une rainure de guidage (106) complémentaire de celui-ci au moins par endroits, ou inversement
**caractérisé en ce que**
le ressort de guidage (32) formé sur le tube de cadre (10) ou la rainure de guidage formée sur le tube de cadre (10) fait saillie axialement vers l'extérieur, par l'intermédiaire de l'ouverture d'insertion (18), à partir de la section de réception de batterie (14) et en particulier à partir de l'espace intérieur (12).

2. Cadre de bicyclette selon la revendication 1,
**caractérisé en ce que**
la batterie (104) peut être insérée dans la section de réception de batterie (14) le long d'une direction d'insertion (Rx) axialement par rapport à l'axe d'extension principal (Ax) de la section de réception de batterie (14).

3. Cadre de bicyclette selon l'une quelconque des revendications précédentes,
**caractérisé en ce que**
l'ouverture d'insertion (18) est agencée au moins partiellement, en particulier sur la face frontale du palier d'entraînement, sur le tube de cadre (10).

4. Cadre de bicyclette selon l'une quelconque des revendications précédentes,
**caractérisé en ce que**
au moins 90 %, en particulier au moins 95 % de la surface extérieure du tube de cadre (10) sont fermés dans la zone de la section de réception de batterie (14).

5. Cadre de bicyclette selon l'une quelconque des revendications précédentes,
**caractérisé en ce que**
la zone de palier d'entraînement (24) est formée latéralement sur le tube de cadre et en particulier à l'extérieur d'un prolongement axial (22) du profil d'espace libre de la section de réception de batterie (14) sur le tube de cadre (10), en particulier comprenant un logement de palier d'entraînement (26) pour recevoir l'entraînement auxiliaire (28), de telle sorte que la batterie (104) peut être poussée latéralement au-delà de l'entraînement auxiliaire (28) monté dans le logement de palier d'entraînement (26) jusque dans la section de réception de batterie (14).

6. Cadre de bicyclette selon l'une quelconque des revendications précédentes,
**caractérisé en ce que**
au moins un moyen d'arrêt de batterie (40) est prévu, en particulier dans l'espace intérieur (12) du tube de cadre (10), pour arrêter la batterie (104) dans la section de réception de batterie (14), comprenant en particulier un capuchon d'extrémité (42) qui peut être inséré dans l'espace intérieur (12) du tube de cadre (10) via l'ouverture d'insertion (18) et qui peut y être verrouillé de manière libérable, et verrouille ainsi une batterie (104) insérée dans la section de réception de batterie (14), en particulier à l'encontre d'une poussée axiale.

7. Cadre de bicyclette selon la revendication 6,
**caractérisé en ce que**
le capuchon d'extrémité (42) comporte au moins un moyen de verrouillage (44) et le tube de cadre (10) comporte au moins un moyen de verrouillage antagoniste (46), ou vice versa, qui peuvent être amenés dans une position de verrouillage mutuel au moyen d'un moyen d'actionnement (50), la batterie (104) étant verrouillée dans la section de réception de batterie (14), et dans une position de déverrouillage par libération de la batterie (104) dans la section de réception de batterie (14).

8. Cadre de bicyclette selon la revendication 7,
**caractérisé en ce que**
le moyen de verrouillage (44) comporte au moins un boulon de blocage (48), et le moyen de verrouillage antagoniste (46) comporte au moins un logement de boulon de serrage complémentaire (52), ou vice versa, dans lequel le boulon de serrage (48) est en prise dans le logement de boulon de serrage (52) de manière à verrouiller le capuchon d'extrémité (42) dans la position de verrouillage et n'est pas en prise dans le logement de boulon de serrage (52) de manière à déverrouiller le capuchon d'extrémité (42) dans la position de déverrouillage.

9. Cadre de bicyclette selon l'une quelconque des revendications 7 ou 8 lorsqu'elles dépendent de la revendication 2,
**caractérisé en ce que**
au moins un moyen de retenue temporaire de batterie (54), et en particulier un système de serrage de batterie, est prévus, en particulier dans l'espace intérieur (12) du tube de cadre (10), de telle sorte que la batterie (104) est montée de manière fixe dans la section de réception de batterie (14) à l'encontre de l'action de la gravité dans la position de déverrouillage, mais peut être retirée manuellement par un utilisateur par l'intermédiaire d'une force de traction dans une direction opposée à la direction d'insertion (Rx).

10. Cadre de bicyclette selon l'une quelconque des revendications précédentes,
**caractérisé en ce que**
au moins un moyen de connexion de batterie (60) est prévu, en particulier dans l'espace intérieur (12) du tube de cadre (10), qui présente une borne de batterie (62), en particulier dans la zone de l'extrémité du tube de cadre (10) tournée vers la zone de tête de direction (20) et en particulier adjacente à la section de réception de batterie (14), pour connecter la batterie insérée dans la section de réception de batterie (14).

11. Cadre de bicyclette selon l'une quelconque des revendications précédentes,
**caractérisé en ce que**
en particulier dans l'espace intérieur (12) du tube de cadre (10), un système de rails (70) est formé et/ou peut être introduit dans celui-ci, qui présente au moins un rail (72) qui peut être notamment poussé axialement dans un logement de rail complémentaire (74) qui est formé le cas échéant d'un seul tenant sur le tube de cadre (10), dans lequel le système de rail (70) peut être fixé de manière sélective sur le tube de cadre (10) à l'encontre d'un déplacement axial au moyen d'un moyen de fixation (76), et dans lequel le système de rails (70) est formé pour recevoir un moyen de verrouillage de batterie (40) et/ou un moyen de guidage de batterie (30) et/ou un moyen de connexion de batterie (60) et/ou un moyen de retenue temporaire de batterie (54) ou présentant un tel moyen.

12. Cadre de bicyclette selon la revendication 11,
**caractérisé en ce que**
le système de rails (70) est conçu de manière à pouvoir être inséré dans l'espace intérieur (12) du tube de cadre (10) conjointement avec au moins des parties du moyen d'arrêt de batterie (40) et/ou du moyen de guidage de batterie (30) et/ou du moyens de connexion de batterie (60) et/ou du moyens de retenue temporaire de batterie (54).

13. Bicyclette avec un entraînement auxiliaire fonctionnant sur batterie et un cadre de bicyclette selon l'une quelconque des revendications précédentes.
